# EUROPEAN PATENT SPECIFICATION

(11) **EP 2 197 955 B1**
(45) Date of publication and mention of the grant of the patent: **14.05.2014**
(21) Application number: 08835042.6
(22) Date of filing: 25.09.2008
(51) Int. Cl.: C08L 71/12, C08L 23/02, H01B 3/30, H01B 3/42

(54) **POLY(ARYLENE ETHER) COMPOSITION AND ITS USE IN THE FABRICATION OF EXTRUDED ARTICLES AND COATED WIRE**
POLY(ARYLENETHER)-ZUSAMMENSETZUNG UND IHRE VERWENDUNG ZUR HERSTELLUNG EXTRUDIERTER ARTIKEL UND EINES BESCHICHTETEN DRAHTES
COMPOSITION DE POLY(ARYLÈNE ÉTHER) ET SON UTILISATION DANS LA FABRICATION D'ARTICLES EXTRUDÉS ET DE FIL ENROBÉ

(30) Priority: 28.09.2007 US 976080 P; 22.09.2008 US 234821
(43) Date of publication of application: 23.06.2010
(73) Proprietor: SABIC Innovative Plastics IP B.V., 4612 PX Bergen Op Zoom OH (NL)
(72) Inventor: BALFOUR, Kim Gene, Delanson New York 12053 (US); GUO, Hua, Selkirk New York 12158 (US); LEVASALMI, Juha-Matti, Delmar New York 12054 (US); RAJAMANI, Vijay, Minneapolis Minnesota 55406 (US)
(74) Representative: Bublak, Wolfgang
(86) International application number: PCT/US2008/077644
(87) International publication number: WO 2009/045836

(56) References cited:
- JP-A- 3 007 755
- JP-A- 3 273 055
- US-B2- 7 179 878
- US-B2- 7 220 917

## Description

### BACKGROUND OF THE INVENTION

Poly(arylene ether) resin is a type of plastic known for its excellent water resistance, dimensional stability, and inherent flame retardancy. Properties such as strength, stiffness, chemical resistance, and heat resistance can be tailored by blending it with various other plastics in order to meet the requirements of a wide variety of consumer products, for example, plumbing fixtures, electrical boxes, automotive parts, and insulation for wire and cable.

Poly(vinyl chloride) (PVC) is one commercial material for flame retardant wire and cable insulation. However, poly(vinyl chloride) is a halogenated material. There is mounting concern over the environmental impact of halogenated materials, and non-halogenated alternatives are being sought. There is therefore a strong desire - and in some places a legislative mandate - to replace poly(vinyl chloride) with non-halogenated polymer compositions.

Crosslinked polyethylene (XLPE) is another commercial material used for flame retardant wire and cable insulation, and it is the dominant material used for automotive applications. However, crosslinked polyethylene requires high levels of inorganic flame retardants to achieve the requisite flame retardancy. This means that the resulting cable insulation is relatively thick and heavy.

Recent research has demonstrated that certain halogen-free, flexible poly(arylene ether) compositions can possess the physical and flame retardant properties needed for use as wire and cable insulation. See, for example, U.S. Patent Application Publication Nos. US 2006/0106139 A1 and US 2006/0182967 A1 of Kosaka et al. The compositions disclosed in these references can exhibit good flame retardancy and good physical properties such as flexibility and tensile strength. However, certain wire and cable uses such as automotive applications require a level of chemical resistance that is difficult to achieve with known poly(arylene ether) compositions. For example, it has been difficult for known poly(arylene ether) compositions to pass the chemical resistance test of the German automotive standard LV112, "Electrical cables for motor vehicles; Single-core, unshielded".

There is a need for insulation compositions exhibiting an improved balance of chemical resistance, electrical resistance per unit weight, and electrical resistance per unit volume, all while maintaining other required properties.

### BRIEF DESCRIPTION OF THE INVENTION

The above-described and other drawbacks are alleviated by a cured composition, comprising: the product obtained on curing with 5 to 5,000 megarads of electron beam radiation an uncured composition comprising 20 to 55 weight percent of a poly(arylene ether), 20 to 50 weight percent of a thermoplastic polyolefin, and 2 to 10 weight percent of a compatibilizer for the poly(arylene ether) and the thermoplastic polyolefin; wherein all weight percents are based on the total weight of the uncured composition; wherein the uncured composition excludes brominated materials; wherein the uncured composition excludes polymerizable monomers; wherein the cured composition passes the class A, B, or C short-term and long term heat ageing tests according to ISO 6722, Section 10; and wherein the cured composition passes the chemical resistance test according to LV112 Section 8.8.1 using at least one fluid medium specified in LV112-1 Media group I or Media group II.

Another embodiment is an extruded article, comprising the product of a process comprising: extrusion molding an uncured composition comprising 20 to 55 weight percent of a poly(arylene ether), 20 to 50 weight percent of a thermoplastic polyolefin, and 2 to 10 weight percent of a compatibilizer for the poly(arylene ether) and the thermoplastic polyolefin; wherein all weight percents are based on the total weight of the uncured composition; wherein the uncured composition excludes brominated materials; and wherein the uncured composition excludes polymerizable monomers; and curing the uncured composition with 5 to 5,000 megarads of electron beam radiation to form a cured composition; wherein the cured composition passes the class A, B, or C short-term and long term heat ageing tests according to ISO 6722, Section 10; and wherein the cured composition passes the chemical resistance test according to LV112 Section 8.8.1 using at least one fluid medium specified in LV112-1 Media group I or Media group II.

Another embodiment is a coated wire, comprising: a conductor, and a covering disposed on the conductor; wherein the covering comprises a cured composition that is the product obtained on curing with 5 to 5,000 megarads of electron beam radiation an uncured composition comprising 20 to 55 weight percent of a poly(arylene ether), 20 to 50 weight percent of a thermoplastic polyolefin, and 2 to 10 weight percent of a compatibilizer for the poly(arylene ether) and the thermoplastic polyolefin; wherein all weight percents are based on the total weight of the uncured composition; wherein the uncured composition excludes brominated materials; and wherein the uncured composition excludes polymerizable monomers; wherein the cured composition passes the class A, B, or C short-term and long term heat ageing tests according to ISO 6722, Section 10; and wherein the cured composition passes the chemical resistance test according to LV112 Section 8.8.1 using at least one fluid medium specified in LV112-1 Media group I or Media group II.

Another embodiment is a method of improving the chemical resistance of a poly(arylene ether) composition, comprising: curing an uncured poly(arylene ether) composition with 5 to 5,000 megarads of electron beam radiation to form a cured poly(arylene ether) composition; wherein the uncured poly(arylene ether) composition comprises 20 to 55 weight percent of a poly(arylene ether), 20 to 50 weight percent of a thermoplastic polyolefin, and 2 to 10 weight percent of a compatibilizer for the poly(arylene ether) and the thermoplastic polyolefin; wherein all weight percents are based on the total weight of the uncured composition ; wherein the uncured composition excludes brominated materials; wherein the uncured composition excludes polymerizable monomers; wherein the cured composition passes the class A, B, or C short-term and long term heat ageing tests according to ISO 6722, Section 10; and wherein the cured composition passes the chemical resistance test according to LV112 Section 8.8.1 using at least one fluid medium specified in LV112-1 Media group I or Media group II.

These and other embodiments are described in detail below.

### DETAILED DESCRIPTION OF THE INVENTION

The present inventors have discovered flexible poly(arylene ether)/polyolefin blends that provide an improved balance of chemical resistance, electrical resistance per unit weight, and electrical resistance per unit volume. The blends are prepared by electron beam curing an uncured composition with specific amounts of a poly(arylene ether), a thermoplastic polyolefin, and a compatibilizer. The electron beam curing process substantially improves the chemical resistance of the composition relative to the corresponding uncured composition. The present cured compositions are prepared without brominated materials and can, optionally, be free of all halogens. They are therefore environmentally superior to poly(vinyl chloride). The present cured compositions also can achieve the requisite flame retardancy needed for automotive wire and cable without using large quantities of inorganic flame retardants. This means that wire and cable insulation made from the cured composition is thinner and lighter than corresponding insulation made from crosslinked polyethylene.

One embodiment is a cured composition, comprising: the product obtained on curing with 5 to 5,000 megarads of electron beam radiation an uncured composition comprising 20 to 55 weight percent of a poly(arylene ether), 20 to 50 weight percent of a thermoplastic polyolefin, and 2 to 10 weight percent of a compatibilizer for the poly(arylene ether) and the thermoplastic polyolefin; wherein all weight percents are based on the total weight of the uncured composition ; wherein the uncured composition excludes brominated materials; wherein the uncured composition excludes polymerizable monomers; wherein the cured composition passes the class A, B, or C short-term and long term heat ageing tests according to ISO 6722, Section 10; and wherein the cured composition passes the chemical resistance test according to LV112 Section 8.8.1 using at least one fluid medium specified in LV112-1 Media group I or Media group II.

The cured composition is obtained on curing the uncured composition with 5 to 5,000 megarads of electron beam radiation. Specifically, the dosage can be 5 to 500 megarads of electron beam radiation, more specifically 10 to 50 megarads of electron beam radiation. When the dosage is significantly less than 5 megarads, insufficient improvement in the chemical resistance of the cured composition is obtained. When the dosage is significantly greater than 5,000 megarads, excessive polymer chain scission can occur and be manifested as reduced flexibility and deteriorated thermal aging properties.

The accelerating voltage of the electrons will vary according to factors including the electron beam equipment used, the composition of the uncured composition, the thickness of the uncured composition, the desired degree of curing, and the desired processing time. In some embodiments, the electrons are accelerated through a voltage of about 10 to about 10,000 kilovolts, specifically about 40 to about 1,000 kilovolts, more specifically about 80 to about 400 kilovolts, still more specifically about 80 to about 150 kilovolts.

The uncured composition can be formed into articles before electron beam curing. Alternatively, the composition can be electron beam cured before being formed into articles.

The uncured composition comprises a poly(arylene ether). Suitable poly(arylene ether)s include those comprising repeating structural units having the formula 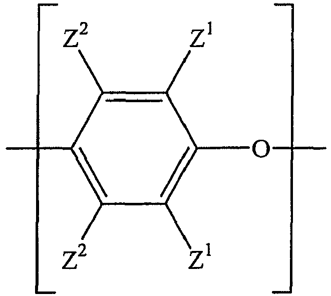 wherein each occurrence of Z¹ is independently halogen, unsubstituted or substituted C₁-C₁₂ hydrocarbyl provided that the hydrocarbyl group is not tertiary hydrocarbyl, C₁-C₁₂ hydrocarbylthio, C₁-C₁₂ hydrocarbyloxy, or C₂-C₁₂ halohydrocarbyloxy wherein at least two carbon atoms separate the halogen and oxygen atoms; and each occurrence of Z² is independently hydrogen, halogen, unsubstituted or substituted C₁-C₁₂ hydrocarbyl provided that the hydrocarbyl group is not tertiary hydrocarbyl, C₁-C₁₂ hydrocarbylthio, C₁-C₁₂ hydrocarbyloxy, or C₂-C₁₂ halohydrocarbyloxy wherein at least two carbon atoms separate the halogen and oxygen atoms. As used herein, the term "hydrocarbyl", whether used by itself, or as a prefix, suffix, or fragment of another term, refers to a residue that contains only carbon and hydrogen. The residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. However, when the hydrocarbyl residue is described as substituted, it may, optionally, contain heteroatoms over and above the carbon and hydrogen members of the substituent residue. Thus, when specifically described as substituted, the hydrocarbyl residue may also contain one or more carbonyl groups, amino groups, hydroxyl groups, or the like, or it may contain heteroatoms within the backbone of the hydrocarbyl residue. As one example, Z¹ may be a di-n-butylaminomethyl group formed by reaction of a terminal 3,5-dimethyl-1,4-phenyl group with the di-n-butylamine component of an oxidative polymerization catalyst.

In some embodiments, the poly(arylene ether) comprises 2,6-dimethyl-1,4-phenylene ether units, 2,3,6-trimethyl-1,4-phenylene ether units, or a combination thereof. In some embodiments, the poly(arylene ether) is a poly(2,6-dimethyl-1,4-phenylene ether). In some embodiments, the poly(arylene ether) comprises terminal reactive capping groups. For example, the poly(arylene ether) can be a methacrylate-capped homopolymer of 2,6-xylenol or a methacrylate-capped copolymer of 2,6-xylenol and 2,2-bis(3,5-dimethyl-4-hydroxyphenyl)propane. In some embodiments, the poly(arylene ether) is a maleic anhydride-grafted poly(arylene ether) such as a poly(2,6-dimethyl-1,4-phenylene ether) grafted with about 1 to 5 weight percent maleic anhydride.

The poly(arylene ether) can comprise molecules having aminoalkyl-containing end groups, typically located in a position ortho to the hydroxy group. Also frequently present are tetramethyldiphenoquinone (TMDQ) end groups, typically obtained from 2,6-dimethylphenol-containing reaction mixtures in which tetramethyldiphenoquinone by-product is present. The poly(arylene ether) can be in the form of a homopolymer, a copolymer, a graft copolymer, an ionomer, or a block copolymer, as well as combinations comprising at least one of the foregoing.

In some embodiments, the poly(arylene ether) has an intrinsic viscosity of 0.1 to 1 deciliter per gram measured at 25°C in chloroform. Specifically, the poly(arylene ether) intrinsic viscosity may be 0.2 to 0.8 deciliter per gram, more specifically 0.3 to 0.6 deciliter per gram, still more specifically 0.4 to 0.5 deciliter per gram.

The uncured composition comprises 20 to 55 weight percent of the poly(arylene ether), based on the total weight of the uncured composition. Within this range, the poly(arylene ether) amount can be 25 to 50 weight percent, specifically 30 to 40 weight percent.

In addition to the poly(arylene ether), the uncured composition comprises a thermoplastic polyolefin. Although there is not necessarily a clear line between thermoplastic polyolefins and polyolefin thermoplastic elastomers, thermoplastic polyolefins typically have a flexural modulus at 25°C that is greater than 1,000 megapascals, whereas polyolefin thermoplastic elastomers typically have a flexural modulus at 25°C that is less than 1,000 megapascals. Suitable thermoplastic polyolefins include, for example, high density polyethylenes, medium density polyethylenes, low density polyethylenes, linear low density polyethylenes, polypropylenes (propylene homopolymers), propylene random copolymers, propylene graft copolymers, and propylene block copolymers.

In some embodiments, the thermoplastic polyolefin is a homopolymer of ethylene or propylene. Exemplary homopolymers include polyethylene, high density polyethylene (HDPE), medium density polyethylene (MDPE), and isotactic polypropylene. Polyolefin resins of this general structure and methods for their preparation are well known in the art. In some embodiments, the thermoplastic polyolefin is an olefin copolymer in which the monomer ratio is controlled to provide a thermoplastic (not elastomeric) product.

Specific examples of commercially available thermoplastic polyolefins include the high density polyethylene available from EquiStar as Petrothene LR5900-00, the medium density polyethylene available from EquiStar as Petrothene GA837091, the linear low density polyethylene available from EquiStar as Petrothene GA818073, the low density polyethylene available from EquiStar as Petrothene NA940000, the ethylene-propylene random copolymer available from ExxonMobil as PP9122, the heterophasic polypropylene-poly(ethylene-propylene) available from Basell as Pro-fax 7624, and the propylene homopolymer available from Sunoco as D015-C2. Mixtures of two or more thermoplastic polyolefins can be used.

The uncured composition comprises 20 to 50 weight percent of the thermoplastic polyolefin, based on the total weight of the uncured composition. Within this range, the thermoplastic polyolefin amount can be 25 to 45 weight percent, specifically 30 to 40 weight percent.

In addition to the poly(arylene ether) and the thermoplastic polyolefin, the composition comprises a compatibilizer for the poly(arylene ether) and the thermoplastic polyolefin. In general, the compatibilizer is a polymer that allows the poly(arylene ether) to be more finely dispersed in the thermoplastic polyolefin that it would be without the compatibilizer. Suitable compatibilizers include polystyrene-poly(ethylene-propylene) diblock copolymers, polystyrene-poly(ethylene-butylene) diblock copolymers, polystyrene-poly(ethylene-propylene)-polystyrene triblock copolymers, polystyrene-poly(ethylene-butylene)-polystyrene triblock copolymers, polystyrene-poly(ethylene-butylene-styrene)-polystyrene triblock copolymers, maleic anhydride-grafted polystyrene-poly(ethylene-butylene)-polystyrene triblock copolymers, and polypropylene-graft-polystyrene copolymers. In some embodiments the compatibilizer has a polystyrene content of at least 35 weight percent, specifically 35 to 80 weight percent, more specifically 40 to 75 weight percent, even more specifically 45 to 70 weight percent, wherein all weight percents are based on the total weight of the compatibilizer. Mixtures of two or more compatibilizers can be used.

Specific examples of commercially available compatibilizers include the polystyrene-poly(ethylene-butylene)-polystyrene triblock copolymer having a polystyrene content of 67 weight percent available from Asahi Kasei as TUFTEC H1043, the polystyrene-poly(ethylene-butylene)-polystyrene triblock copolymer having a polystyrene content of 42 weight percent available from Asahi Kasei as TUFTEC H1051, the polystyrene-poly(ethylene-butylene-styrene)-polystyrene triblock copolymer having a polystyrene content of 41 weight percent available from Kraton Polymers as Kraton RP6936, the polystyrene-poly(ethylene-butylene-styrene)-polystyrene triblock copolymer having a polystyrene content of 58 weight percent available from Kraton Polymers as Kraton RP6935, the maleic anhydride-grafted polystyrene-poly(ethylene-butylene)-polystyrene triblock copolymer having a polystyrene content of 13 weight percent available from Kraton Polymers as Kraton FG1924, and the polystyrene-poly(ethylene-propylene) diblock copolymer having a polystyrene content of 37 weight percent available from Kraton Polymers as Kraton G1701.

In some embodiments, the compatibilizer is a polystyrene-poly(ethylene-butylene)-polystyrene triblock copolymer having a polystyrene content of 35 to 80 weight percent, specifically 40 to 75 weight percent, more specifically 45 to 70 weight percent based on the total weight of the triblock copolymer. In some embodiments, the compatibilizer is a polystyrene-poly(ethylene-butylene-styrene)-polystyrene triblock copolymer having a polystyrene content of 35 to 65 weight percent, specifically 35 to 55 weight percent, more specifically 35 to 50 weight percent, even more specifically 35 to 45 weight percent, based on the total weight of the triblock copolymer.

The uncured composition comprises the compatibilizer in an amount of 2 to 20 weight percent, based on the total weight of the uncured composition. Specifically, the compatibilizer amount can be 2 to 10 weight percent, more specifically 3 to 8 weight percent, more specifically 4 to 6 weight percent.

The poly(arylene ether), the thermoplastic polyolefin, and the compatibilizer are required components of the uncured composition. The uncured composition can, optionally, further comprise other components. For example, in some embodiments, the uncured composition further comprises an impact modifier. The impact modifier typically resides primarily in a continuous thermoplastic polyolefin phase. Polymers suitable for use as impact modifiers include, for example, polystyrene-poly(ethylene-butylene)-polystyrene triblock copolymers having a polystyrene content less than 35 weight percent, polystyrene-polybutadiene-polystyrene triblock copolymers, ethylene-propylene-diene monomer rubbers (EPDM), ethylene-octene copolymers, and ethylene-butene copolymers. Mixtures of two or more impact modifiers can be used.

Specific examples of commercially available impact modifiers include the polystyrene-poly(ethylene-butylene)-polystyrene triblock copolymer having a polystyrene content of 30 weight percent available from Kraton Polymers as Kraton G1650, the polystyrene-poly(ethylene-butylene)-polystyrene triblock copolymer having a polystyrene content of 33 weight percent available from Kraton Polymers as Kraton G1651, the ethylene-propylene-ethylidenenorbornene copolymer available from ExxonMobil as Vistalon 2727, the olefin block copolymers available from Dow Chemical under the Infuse trade name, the ethylene-octene copolymer available from Dow Chemical as Engage 8180, the ethylene-butene copolymer available from Mitsui as Tafmer A-0585S, and the polystyrene-polybutadiene-polystyrene triblock copolymer having a polystyrene content of 31 weight percent available from Kraton Polymers as Kraton D1101.

In some embodiments, the impact modifier comprises an ethylene-propylene-diene rubber. In some embodiments, the impact modifier comprises a maleic anhydride grafted polystyrene-poly(ethylene-butylene)-polystyrene triblock copolymer, optionally in combination with a polyamine such as a polyethyleneimine (in this embodiment, the mole ratio of carboxylic acid groups on the maleic anhydride-grafted polystyrene-poly(ethylene-butylene)-polystyrene to amine groups on the polyamine can be 1:5 to 5:1, specifically 1:2 to 2:1). In some embodiments, the impact modifier comprises an ethylene-alpha olefin copolymer.

When present, the impact modifier is used in an amount of 5 to 20 weight percent, specifically 8 to 17 weight percent, more specifically 10 to 14 weight percent, based on the total weight of the composition.

The uncured composition can, optionally, further comprise a flame retardant. Types of flame retardants that can be use include triaryl phosphates (such as triphenyl phosphate, alkylated triphenyl phosphates, resorcinol bis(diphenyl phosphate), resorcinol bis(di-2,6-xylyl phosphate), and bisphenol A bis(diphenyl phosphate)), metal phosphinates (such as aluminum tris(diethyl phosphinate)), melamine salts (such as melamine cyanurate, melamine phosphate, melamine pyrophosphate, and melamine polyphosphate), borate salts (such as zinc borate), and metal hydroxides (such as magnesium hydroxide and aluminum hydroxide).

The uncured composition can, optionally, further comprise various other additives known in the thermoplastics art. For example, the thermoplastic composition may, optionally, further comprise an additive chosen from stabilizers, mold release agents, processing aids, drip retardants, nucleating agents, UV blockers, dyes, pigments, antioxidants, anti-static agents, blowing agents, mineral oil, metal deactivators, antiblocking agents, nanoclays, and the like, and combinations thereof.

As the uncured composition is defined as comprising multiple components, it will be understood that each component is chemically distinct, particularly in the instance that a single chemical compound may satisfy the definition of more than one component. For example, when the composition comprises an impact modifier, a single polyolefin cannot function as both the thermoplastic polyolefin and the impact modifier.

In some embodiments, the thermoplastic composition excludes any polymer not described herein as required or optional. In some embodiments, the thermoplastic composition excludes any flame retardant not described herein as required or optional. In some embodiments, the thermoplastic composition excludes fillers.

The uncured composition excludes brominated materials. As used herein, the phrase "excludes brominated materials" means that the uncured composition comprises less than 0.01 weight percent of brominated materials measured as atomic bromine. Specifically, the uncured composition can comprise less than 0.001 weight percent of brominated materials. More specifically, the uncured composition can comprises no intentionally added brominated materials. Examples of brominated materials that are excluded from the uncured composition are the brominated compounds, oligomers, and polymers described in U.S. Patent Nos. 4,808,647 and 4,910,241 to Abolins et al., as well as European Patent Application No. EP 135,726 A2 of Abolins et al.

In some embodiments, the composition is halogen-free, by which it is meant that the composition comprises less than 0.1 weight percent of total halogens, specifically less than 0.01 weight percent of total halogens. In some embodiments, the composition comprises no intentionally added halogens.

The preparation of the uncured composition is normally achieved by melt blending the ingredients under conditions for the formation of an intimate blend. Such conditions often include mixing in single-screw or twin-screw type extruders or similar mixing devices that can apply a shear to the components.

The uncured composition excludes polymerizable monomers. As used herein, the phrase "excludes polymerizable monomers" means that the uncured composition comprises less than 0.05 weight percent total of polymerizable acrylic monomers and allylic monomers, specifically less than 0.01 weight percent total of polymerizable monomers, more specifically no intentionally added polymerizable monomers. Examples of polymerizable acrylic monomers and allylic monomers excluded from the uncured composition can be found in U.S. Patent No. 6,022,550 to Watanabe. The uncured composition excludes polymerizable monomers of any kind.

In some embodiments, the cured composition comprises a continuous phase comprising the thermoplastic polyolefin, and a dispersed phase comprising the poly(arylene ether). Those skilled in the polymer arts can determine whether such a condition exists using electron microscopy and phase-selective stains.

The cured composition exhibits excellent thermal stability. In particular, the cured composition passes the class A, B, or C short-term and long term heat ageing tests according to ISO 6722, Section 10.

The cured composition exhibits substantially improved chemical resistance compared to the uncured composition. In particular, the cured composition passes the chemical resistance test according to LV112 Section 8.8.1 using at least one fluid medium specified in LV112-1 Media group I or Media group II.

In some embodiments, the cured composition exhibits a UL 94 Vertical Burning Flame Test rating of V-0 or V-1, specifically a rating of V-0, at a sample thickness of 6.4 millimeters; a tensile stress at break of at least 5 megapascals, specifically 10 to 25 megapascals, measured at 23°C according to ASTM D638; and a flexural modulus of 10 to 5,000 megapascals, specifically 50 to 1,000 megapascals, more specifically 50 to 500 megapascals, measured at 23°C according to ASTM D790.

In some embodiments, a test sample coated wire exhibits a tensile stress at break of at least 10 megapascals, specifically 10 to 30 megapascals, measured at 23°C according to UL 1581, Section 470; a tensile elongation at break of at least 100 percent, specifically 100 to 250 megapascals, measured at 23°C according to UL 1581, Section 470; and a passing flame test rating according to UL 1581, Section 1080; wherein the test sample coated wire consists of an AWG 24 conductor having a nominal cross sectional area of 0.205 millimeter², and a tubular covering comprising the thermoplastic composition and having a nominal outer diameter of 2 millimeters.

In some embodiments of the cured composition, the poly(arylene ether) is a poly(2,6-dimethyl-1,4-phenylene ether) having an intrinsic viscosity of 0.3 to 0.6 deciliter per gram measured at 25°C in chloroform; the uncured composition comprises 30 to 40 weight percent of the poly(arylene ether), the thermoplastic polyolefin is a high density polyethylene, a linear low density polyethylene, or a mixture thereof; the uncured composition comprises 30 to 40 weight percent of the thermoplastic polyolefin; the impact modifier is a polystyrene-poly(ethylenebutylene)-polystyrene triblock copolymer having a weight average molecular weight of 15,000 to 50,000 atomic mass units, specifically 20,000 to 40,000 atomic mass units, more specifically 25,000 to 35,000 atomic mass units; the uncured composition comprises 8 to 17 weight percent of the impact modifier; the compatibilizer is a polystyrene-poly(ethylene-butylene)-polystyrene triblock copolymer having a polystyrene content of 35 to 70 weight percent based on the total weight of the triblock copolymer; the uncured composition comprises 3 to 8 weight percent of the compatibilizer; and the cured composition is halogen-free.

One embodiment is a cured composition, comprising: the product obtained on curing with 5 to 5,000 megarads of electron beam radiation an uncured composition comprising 20 to 55 weight percent of a poly(arylene ether), 20 to 50 weight percent of a thermoplastic polyolefin, and 2 to 20 weight percent of a compatibilizer for the poly(arylene ether) and the thermoplastic polyolefin; wherein all weight percents are based on the total weight of the uncured composition ; wherein the uncured composition excludes brominated materials; wherein the uncured composition excludes polymerizable monomers; wherein the cured composition passes the class A, B, or C short-term and long term heat ageing tests according to ISO 6722, Section 10; and wherein the cured composition passes the chemical resistance test according to LV112 Section 8.8.1 using at least one fluid medium specified in LV112-1 Media group I or Media group II.

The cured composition is well suited for use in fabricating articles via extrusion molding. Thus, one embodiment is an extruded article, comprising the product of a process comprising: extrusion molding an uncured composition comprising 20 to 55 weight percent of a poly(arylene ether), 20 to 50 weight percent of a thermoplastic polyolefin, and 2 to 10 weight percent of a compatibilizer for the poly(arylene ether) and the thermoplastic polyolefin; wherein all weight percents are based on the total weight of the uncured composition ; wherein the uncured composition excludes brominated materials; and wherein the uncured composition excludes polymerizable monomers; and curing the uncured composition with 5 to 5,000 megarads of electron beam radiation to form a cured composition; wherein the cured composition passes the class A, B, or C short-term and long term heat ageing tests according to ISO 6722, Section 10; and wherein the cured composition passes the chemical resistance test according to LV112 Section 8.8.1 using at least one fluid medium specified in LV112-1 Media group I or Media group II. In some embodiments, the extruded article is in the form of a hollow tube. In some embodiments, the extruded article is in the form of a tubular covering surrounding a core of an electrically conducting or light conducting medium.

The cured composition is particularly suited for use in the fabrication of insulation for wire and cable. Methods of fabricating coated wire are known in the art and described, for example, in U.S. Patent Application Publication No. US 2006/0131052 A1 of Mhetar et al. Thus, one embodiment is a coated wire, comprising: a conductor, and a covering disposed on the conductor; wherein the covering comprises a cured composition that is the product obtained on curing with 5 to 5,000 megarads of electron beam radiation an uncured composition comprising 20 to 55 weight percent of a poly(arylene ether), 20 to 50 weight percent of a thermoplastic polyolefin, 2 to 10 weight percent of a compatibilizer for the poly(arylene ether) and the thermoplastic polyolefin; wherein all weight percents are based on the total weight of the uncured composition ; wherein the uncured composition excludes brominated materials; and wherein the uncured composition excludes polymerizable ; wherein the cured composition passes the class A, B, or C short-term and long term heat ageing tests according to ISO 6722, Section 10; and wherein the cured composition passes the chemical resistance test according to LV112 Section 8.8.1 using at least one fluid medium specified in LV112-1 Media group I or Media group II. It will be understood that the configuration and dimension of the coated wire claimed are not limited to those of the test sample coated wire for which property values are specified. For example, the coated wire can have a conductor with the dimensions specified in UL 1581, Section 20, Table 20.1 for AWG 35 to AWG 10. As another example, the covering disposed on the conductor can have a thickness of 0.2 to 1 millimeter. The term "coated wire" also include multi-strand cables, including so-called ribbon cables.

Electron beam curing substantially improves the chemical resistance of the uncured composition. Thus, one embodiment is a method of improving the chemical resistance of a poly(arylene ether) composition, comprising: curing an uncured poly(arylene ether) composition with 5 to 5,000 megarads of electron beam radiation to form a cured poly(arylene ether) composition; wherein the uncured poly(arylene ether) composition comprises 20 to 55 weight percent of a poly(arylene ether), 20 to 50 weight percent of a thermoplastic polyolefin, and 2 to 10 weight percent of a compatibilizer for the poly(arylene ether) and the thermoplastic polyolefin; wherein all weight percents are based on the total weight of the uncured composition; wherein the uncured composition excludes brominated materials; wherein the uncured composition excludes polymerizable monomers; wherein the cured composition passes the class A, B, or C short-term and long term heat ageing tests according to ISO 6722, Section 10; and wherein the cured composition passes the chemical resistance test according to LV112 Section 8.8.1 using at least one fluid medium specified in LV112-1 Media group I or Media group II.

The invention includes at least the following embodiments:

Embodiment 1. A cured composition, comprising: the product obtained on curing with 5 to 5,000 megarads of electron beam radiation an uncured composition comprising 20 to 55 weight percent of a poly(arylene ether), 20 to 50 weight percent of a thermoplastic polyolefin, and 2 to 10 weight percent of a compatibilizer for the poly(arylene ether) and the thermoplastic polyolefin; wherein all weight percents are based on the total weight of the uncured composition ; wherein the uncured composition excludes brominated materials; wherein the uncured composition excludes polymerizable monomers; wherein the cured composition passes the class A, B, or C short-term and long term heat ageing tests according to ISO 6722, Section 10; and wherein the cured composition passes the chemical resistance test according to LV112 Section 8.8.1 using at least one fluid medium specified in LV112-1 Media group I or Media group II.

Embodiment 2: The cured composition of embodiment 1, comprising a continuous phase comprising the thermoplastic polyolefin, and a dispersed phase comprising the poly(arylene ether).

Embodiment 3: The cured composition of embodiments 1 or 2, wherein the compatibilizer is a polystyrene-poly(ethylene-butylene)-polystyrene triblock copolymer having a polystyrene content of 35 to 80 weight percent based on the total weight of the triblock copolymer.

Embodiment 4: The cured composition of embodiment 1 or 2, wherein the compatibilizer is a polystyrene-poly(ethylene-butylene-styrene)-polystyrene triblock copolymer having a polystyrene content of 35 to 65 weight percent based on the total weight of the triblock copolymer.

Embodiment 5: The cured composition of any of embodiments 1-4, wherein the uncured composition further comprises 5 to 20 weight percent of an impact modifier.

Embodiment 6: The cured composition of embodiment 5, wherein the impact modifier comprises an ethylene-propylene-diene rubber.

Embodiment 7: The cured composition of embodiment 5, wherein the impact modifier comprises the reaction product of a maleic anhydride grafted polystyrene-poly(ethylene-butylene)-polystyrene triblock copolymer and a polyethyleneimine.

Embodiment 8: The cured composition of embodiment 5, wherein the impact modifier comprises an ethylene-alpha olefin copolymer.

Embodiment 9: The cured composition of any of embodiments 1-8, wherein the cured composition is halogen-free.

Embodiment 10: The cured composition of embodiment 1, wherein the poly(arylene ether) is a poly(2,6-dimethyl-1,4-phenylene ether) having an intrinsic viscosity of 0.3 to 0.6 deciliter per gram measured at 25°C in chloroform; wherein the uncured composition comprises 30 to 40 weight percent of the poly(arylene ether); wherein the thermoplastic polyolefin is a high density polyethylene, a linear low density polyethylene, or a mixture thereof; wherein the uncured composition comprises 30 to 40 weight percent of the thermoplastic polyolefin; wherein the uncured composition further comprises an impact modifier comprising a polystyrene-poly(ethylene-butylene)-polystyrene triblock copolymer having a weight average molecular weight of 15,000 to 50,000 atomic mass units; wherein the uncured composition comprises 8 to 17 weight percent of the impact modifier; wherein the compatibilizer is a polystyrene-poly(ethylene-butylene)-polystyrene triblock copolymer having a polystyrene content of 35 to 70 weight percent based on the total weight of the triblock copolymer; wherein the uncured composition comprises 3 to 8 weight percent of the compatibilizer; and wherein the cured composition is halogen-free.

Embodiment 11: An extruded article, comprising the product of a process comprising: extrusion molding an uncured composition comprising 20 to 55 weight percent of a poly(arylene ether), 20 to 50 weight percent of a thermoplastic polyolefin, and 2 to 10 weight percent of a compatibilizer for the poly(arylene ether) and the thermoplastic polyolefin; wherein all weight percents are based on the total weight of the uncured composition; wherein the uncured composition excludes brominated materials; and wherein the uncured composition excludes polymerizable monomers; and curing the uncured composition with 5 to 5,000 megarads of electron beam radiation to form a cured composition; wherein the cured composition passes the class A, B, or C short-term and long term heat ageing tests according to ISO 6722, Section 10; and wherein the cured composition passes the chemical resistance test according to LV112 Section 8.8.1 using at least one fluid medium specified in LV112-1 Media group I or Media group II.

Embodiment 12: The extruded article of embodiment 11, wherein the cured composition comprises a continuous phase comprising the thermoplastic polyolefin, and a dispersed phase comprising the poly(arylene ether).

Embodiment 13: The extruded article of embodiment 11 or 12, wherein the compatibilizer is a polystyrene-poly(ethylene-butylene)-polystyrene triblock copolymer having a polystyrene content of 35 to 80 weight percent based on the total weight of the triblock copolymer.

Embodiment 14: The extruded article of embodiment 11 or 12, wherein the compatibilizer is a polystyrene-poly(ethylene-butylene-styrene)-polystyrene triblock copolymer having a polystyrene content of 35 to 65 weight percent based on the total weight of the triblock copolymer.

Embodiment 15: The extruded article of any of embodiments 11-14, wherein the uncured composition further comprises 5 to 20 weight percent of an impact modifier.

Embodiment 16: The extruded article of embodiment 15, wherein the impact modifier comprises an ethylene-propylene-diene rubber.

Embodiment 17: The extruded article of embodiment 15, wherein the impact modifier comprises the reaction product of a maleic anhydride grafted polystyrene-poly(ethylene-butylene)-polystyrene triblock copolymer and a polyethyleneimine.

Embodiment 18: The extruded article of embodiment 15, wherein the impact modifier comprises an ethylene-alpha olefin copolymer.

Embodiment 19: The extruded article of any of embodiments 11-18, wherein the cured composition is halogen-free.

Embodiment 20: The extruded article of embodiment 11, wherein the poly(arylene ether) is a poly(2,6-dimethyl-1,4-phenylene ether) having an intrinsic viscosity of 0.3 to 0.6 deciliter per gram measured at 25°C in chloroform; wherein the uncured composition comprises 30 to 40 weight percent of the poly(arylene ether); wherein the thermoplastic polyolefin is a high density polyethylene, a linear low density polyethylene, or a mixture thereof; wherein the uncured composition comprises 30 to 40 weight percent of the thermoplastic polyolefin; wherein the uncured composition further comprises an impact modifier comprising a polystyrene-poly(ethylene-butylene)-polystyrene triblock copolymer having a weight average molecular weight of 15,000 to 50,000 atomic mass units; wherein the uncured composition comprises 8 to 17 weight percent of the impact modifier; wherein the compatibilizer is a polystyrene-poly(ethylene-butylene)-polystyrene triblock copolymer having a polystyrene content of 35 to 70 weight percent based on the total weight of the triblock copolymer; wherein the uncured composition comprises 3 to 8 weight percent of the compatibilizer; and wherein the cured composition is halogen-free.

Embodiment 21: A coated wire, comprising: a conductor, and a covering disposed on the conductor; wherein the covering comprises a cured composition that is the product obtained on curing with 5 to 5,000 megarads of electron beam radiation an uncured composition comprising 20 to 55 weight percent of a poly(arylene ether), 20 to 50 weight percent of a thermoplastic polyolefin, and 2 to 10 weight percent of a compatibilizer for the poly(arylene ether) and the thermoplastic polyolefin; wherein all weight percents are based on the total weight of the uncured composition; wherein the uncured composition excludes brominated materials; and wherein the uncured composition excludes polymerizable monomers; wherein the cured composition passes the class A, B, or C short-term and long term heat ageing tests according to ISO 6722, Section 10; and wherein the cured composition passes the chemical resistance test according to LV112 Section 8.8.1 using at least one fluid medium specified in LV112-1 Media group I or Media group II.

Embodiment 22: The coated wire of embodiment 21, wherein the cured composition comprises a continuous phase comprising the thermoplastic polyolefin, and a dispersed phase comprising the poly(arylene ether).

Embodiment 23: The coated wire of embodiment 21 or 22, wherein the compatibilizer is a polystyrene-poly(ethylene-butylene)-polystyrene triblock copolymer having a polystyrene content of 35 to 80 weight percent based on the total weight of the triblock copolymer.

Embodiment 24: The coated wire of embodiment 21 or 22, wherein the compatibilizer is a polystyrene-poly(ethylene-butylene-styrene)-polystyrene triblock copolymer having a polystyrene content of 35 to 65 weight percent based on the total weight of the triblock copolymer.

Embodiment 25: The coated wire of any of embodiments 21-24, wherein the uncured composition further comprises 5 to 20 weight percent of an impact modifier.

Embodiment 26: The coated wire of embodiment 25, wherein the impact modifier comprises an ethylene-propylene-diene rubber.

Embodiment 27: The coated wire of embodiment 25, wherein the impact modifier comprises a maleic anhydride grafted polystyrene-poly(ethylenebutylene)-polystyrene triblock copolymer.

Embodiment 28: The coated wire of embodiment 25, wherein the impact modifier comprises an ethylene-alpha olefin copolymer.

Embodiment 29: The coated wire of any of embodiments 21-28, wherein the cured composition is halogen-free.

Embodiment 30: The coated wire of embodiment 21, wherein the poly(arylene ether) is a poly(2,6-dimethyl-1,4-phenylene ether) having an intrinsic viscosity of 0.3 to 0.6 deciliter per gram measured at 25°C in chloroform; wherein the uncured composition comprises 30 to 40 weight percent of the poly(arylene ether); wherein the thermoplastic polyolefin is a high density polyethylene, a linear low density polyethylene, or a mixture thereof; wherein the uncured composition comprises 30 to 40 weight percent of the thermoplastic polyolefin; wherein the uncured composition further comprises an impact modifier comprising a polystyrene-poly(ethylene-butylene)-polystyrene triblock copolymer having a weight average molecular weight of 15,000 to 50,000 atomic mass units; wherein the uncured composition comprises 8 to 17 weight percent of the impact modifier; wherein the compatibilizer is a polystyrene-poly(ethylene-butylene)-polystyrene triblock copolymer having a polystyrene content of 35 to 70 weight percent based on the total weight of the triblock copolymer; wherein the uncured composition comprises 3 to 8 weight percent of the compatibilizer; and wherein the cured composition is halogen-free.

Embodiment 31: A method of improving the chemical resistance of a poly(arylene ether) composition, comprising: curing an uncured poly(arylene ether) composition with 5 to 5,000 megarads of electron beam radiation to form a cured poly(arylene ether) composition; wherein the uncured poly(arylene ether) composition comprises 20 to 55 weight percent of a poly(arylene ether), 20 to 50 weight percent of a thermoplastic polyolefin, 2 to 10 weight percent of a compatibilizer for the poly(arylene ether) and the thermoplastic polyolefin; wherein all weight percents are based on the total weight of the uncured composition wherein the uncured composition excludes brominated materials; wherein the uncured composition excludes polymerizable monomers; wherein the cured composition passes the class A, B, or C short-term and long term heat ageing tests according to ISO 6722, Section 10; and wherein the cured composition passes the chemical resistance test according to LV112 Section 8.8.1 using at least one fluid medium specified in LV 112-1 Media group I or Media group II.

Embodiment 32: The method of embodiment 31, wherein the cured composition comprises a continuous phase comprising the thermoplastic polyolefin, and a dispersed phase comprising the poly(arylene ether).

Embodiment 33: The method of embodiment 31 or 32, wherein the compatibilizer is a polystyrene-poly(ethylene-butylene)-polystyrene triblock copolymer having a polystyrene content of 35 to 80 weight percent based on the total weight of the triblock copolymer.

Embodiment 34: The method of embodiment 31 or 32, wherein the compatibilizer is a polystyrene-poly(ethylene-butylene-styrene)-polystyrene triblock copolymer having a polystyrene content of 35 to 65 weight percent based on the total weight of the triblock copolymer.

Embodiment 35: The method of any of embodiments 31-34, wherein the uncured composition further comprises 5 to 20 weight percent of an impact modifier.

Embodiment 36: The method of any of embodiment 35, wherein the impact modifier comprises an ethylene-propylene-diene rubber.

Embodiment 37: The method of embodiment 35, wherein the impact modifier comprises a maleic anhydride grafted polystyrene-poly(ethylenebutylene)-polystyrene triblock copolymer.

Embodiment 38: The method of embodiment 35, wherein the impact modifier comprises an ethylene-alpha olefin copolymer.

Embodiment 39: The method of any of embodiments 31-38, wherein the cured composition is halogen-free.

Embodiment 40: The method of embodiment 31, wherein the poly(arylene ether) is a poly(2,6-dimethyl-1,4-phenylene ether) having an intrinsic viscosity of 0.3 to 0.6 deciliter per gram measured at 25°C in chloroform; wherein the uncured composition comprises 30 to 40 weight percent of the poly(arylene ether); wherein the thermoplastic polyolefin is a high density polyethylene, a linear low density polyethylene, or a mixture thereof; wherein the uncured composition comprises 30 to 40 weight percent of the thermoplastic polyolefin; wherein the uncured composition further comprises an impact modifier comprising a polystyrene-poly(ethylene-butylene)-polystyrene triblock copolymer having a weight average molecular weight of 15,000 to 50,000 atomic mass units; wherein the uncured composition comprises 8 to 17 weight percent of the impact modifier; wherein the compatibilizer is a polystyrene-poly(ethylene-butylene)-polystyrene triblock copolymer having a polystyrene content of 35 to 70 weight percent based on the total weight of the triblock copolymer; wherein the uncured composition comprises 3 to 8 weight percent of the compatibilizer; and wherein the cured composition is halogen-free.

Embodiment 41: A cured composition, comprising: the product obtained on curing with 5 to 5,000 megarads of electron beam radiation an uncured composition comprising 20 to 55 weight percent of a poly(arylene ether), 20 to 50 weight percent of a thermoplastic polyolefin, and 2 to 20 weight percent of a compatibilizer for the poly(arylene ether) and the thermoplastic polyolefin; wherein all weight percents are based on the total weight of the uncured composition ; wherein the uncured composition excludes brominated materials; wherein the uncured composition excludes polymerizable monomers; wherein the cured composition passes the class A, B, or C short-term and long term heat ageing tests according to ISO 6722, Section 10; and wherein the cured composition passes the chemical resistance test according to LV112 Section 8.8.1 using at least one fluid medium specified in LV112-1 Media group I or Media group II.

The invention is further illustrated by the following non-limiting examples.

### EXAMPLES 1-90

Components used to form the melt-blended (but uncured) thermoplastic compositions are described in Table 1.

**Table 1**

| Component | Description |
|---|---|
| PPE | Poly(2,6-dimethyl-1,4-phenylene ether) having an intrinsic viscosity of 0.46 deciliter per gram; obtained as PPO 646 from SABIC Innovative Plastics. |
| FPPE | A methacrylate-dicapped copolymer of 2,6-xylenol and 2,2-bis(3,5-dimethyl-4-hydroxyphenyl)propane (tetramethyl bisphenol A), the copolymer having an intrinsic viscosity of 0.46 deciliter per gram. |
| Linear ethylene homopolymer | High Density Polyethylene having density of 0.9435 grams per milliliter at 25°C, obtained as Petrothene LR 5900-00 from EquiStar. |
| Linear ethylene copolymer | Linear low density polyethylene having density of 0.9205 grams per milliliter at 25°C; obtained as Petrothene GA818073 from EquiStar. |
| Branched ethylene homopolymer | Low Density Polyethylene having density of 0.918 gram per milliliter at 25°C, obtained as Petrothene NA59000 from EquiStar. |
| Random propylene copolymer | Random propylene-ethylene copolymer having density of 0.9 gram per milliliter at 25°C; obtained as PP9912 from ExxonMobil. |
| Propylene homopolymer | Propylene homopolymer having density of 0.905 gram per milliliter at 25°C; obtained as D-015-C from Aristech. |
| EPDM | Ethylene-propylene-diene copolymer rubber; obtained as Vistalon 2727 from ExxonMobil. |
| SEBS-MA | Maleic anhydride-grafted polystyrene-poly(ethylene-butylene)-polystyrene triblock copolymer; obtained as Kraton FG 1924 from Kraton Polymers. |
| Polyethyleneimine | Polyethyleneimine having a number average molecular weight of about 10,000 atomic mass units; obtained as EPOMIN SP-200 from Nippon Shokubai. |
| Soft ethylene copolymer | Ethylene-alpha olefin elastomer having density of 0.863, obtained as ENGAGE 8180 from Dow. |
| Compatibilizer | Polystyrene-poly(ethylene-butylene)-polystryene triblock copolymer having a polystyrene content of 42 weight percent; obtained from as Tuftec H1051 from Asahi Kasei. |
| Stabilizer | A blend of thermal stabilizers and antioxidants |
| FR | Bisphenol A bis(diphenyl phosphate); obtained as Fyrolflex BDP from Supresta. |

Specific compositions are detailed in Table 3, where component amounts are expressed in parts by weight. Compositions are blended on a 37-millimeter inner diameter twin-screw extruder with twelve zones. The extruder is operated at a screw rotation rate of 450 rotations per minute with temperatures of 225°C in zone 1, 245°C in zones 2-12, and 255°C at the die. All components are added at the feed throat except for liquid triaryl phosphate flame retardants, which are added via injection in zone 2.

Test sample coated wires are prepared using the extrusion coating parameters shown in Table 2.

**Table 2**

| Wire Coating Extrusion Parameters | Typical Value | Units |
|---|---|---|
| Drying Temperature | 60-85 | °C |
| Drying Time | 12 | hours |
| Maximum Moisture Content | 0.02 | % |
| Extruder Length/Diameter Ratio (L/D) | 22:1 to 26:1 | -- |
| Screw speed | 15-85 | rpm |
| Feed Zone Temperature | 180-250 | °C |
| Middle Zone Temperature | 220-270 | °C |
| Head Zone Temperature | 220-270 | °C |
| Neck Temperature | 220-270 | °C |
| Cross-head Temperature | 220-270 | °C |
| Die Temperature | 220-270 | °C |
| Melt Temperature | 220-270 | °C |
| Conductor Pre-heat Temperature | 25-150 | °C |
| Screen Pack | 150-100 | *µ*m |
| Cooling Water Air Gap | 100-200 | mm |
| Water Bath Temperature | 15-80 | °C |

An apparatus suitable for electron beam crosslinking is the Application Development Unit available from Advanced Electron Beam Inc. The electrons may be accelerated through about 80 to about 150 kilovolts (kV).

Chemical resistance for each blend is determined according to the German standard LV112, which was developed by a consortium of German automotive companies. Specifically, chemical resistance is determined according to LV112, 2005-2006 Version, Section 8.8.1, "Chemical Resistance to ISO 6722" using at least one fluid medium specified in LV112-1 Media group I or Media group II.

### EXAMPLES 91-94

These examples further illustrate the improved properties of the cured composition. Compositions were prepared using the procedures described above and the components and amounts listed in Table 4. The components are as described in Table 1, except that the SEBS-MA in these experiments was prepared by melt extruding 100 parts by weight of the polystyrene-poly(ethylene-butylene)-polystyrene copolymer obtained from Asahi Kasei as TUFTEC H1051 with 3 parts by weight of maleic anhydride; analysis of the extruded product was consistent with a maleic-anhydride functionalized polystyrene-poly(ethylene-butylene)-polystyrene incorporating about 1.6-2.0 weight percent of poly(maleic anhydride) grafts.

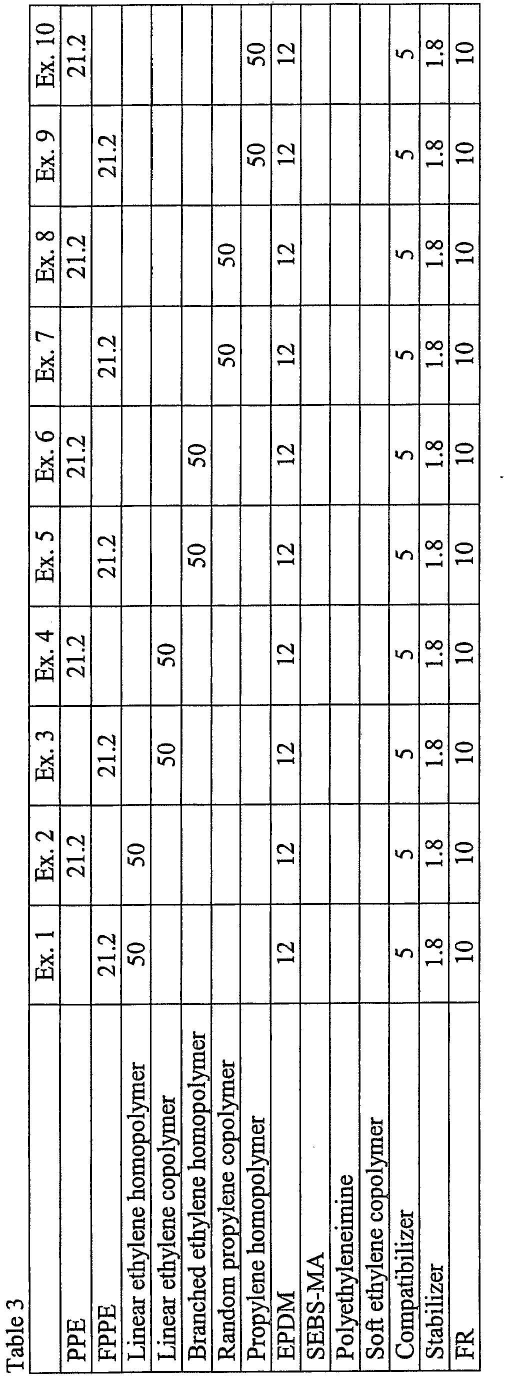

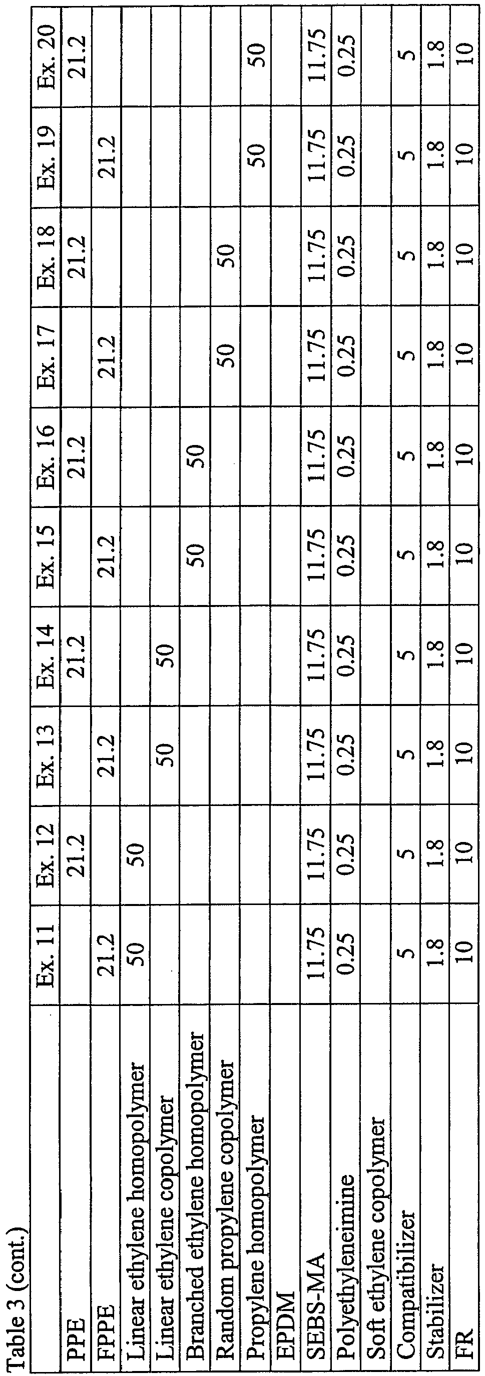

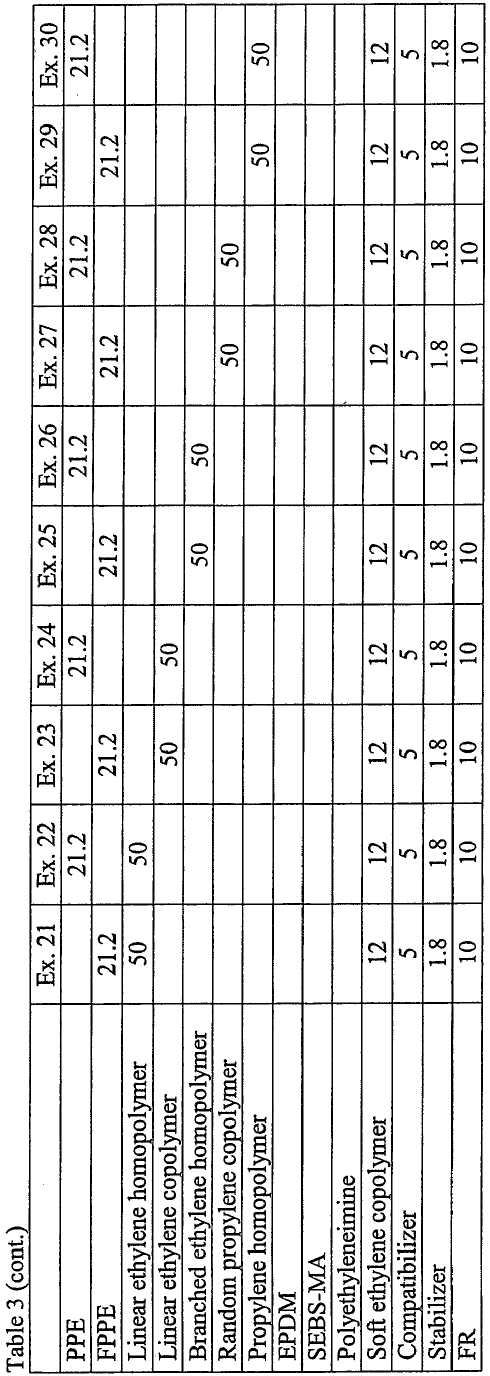

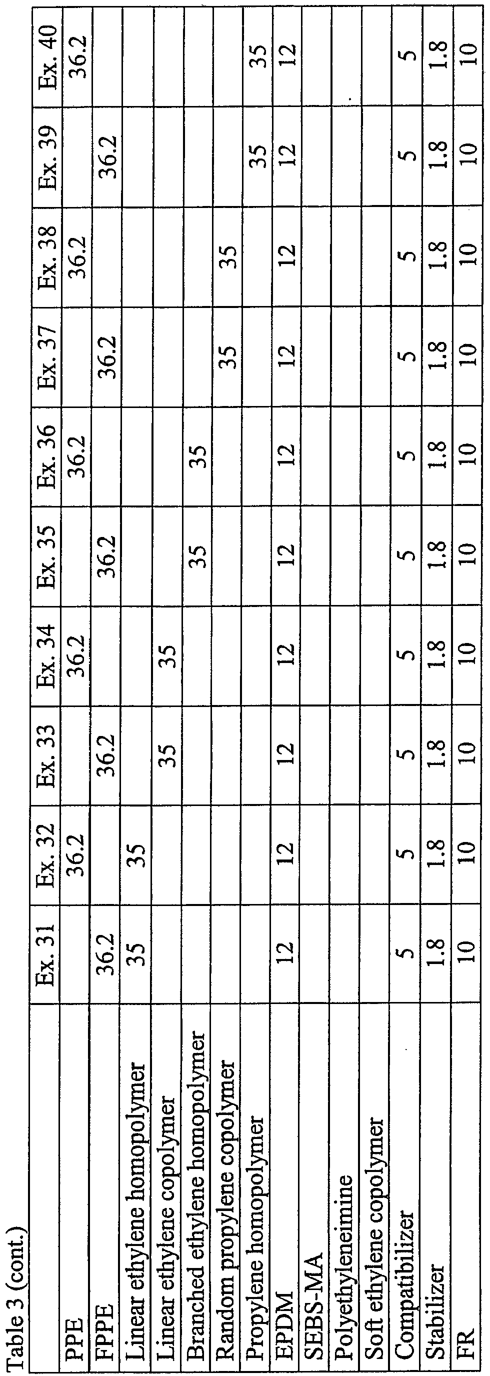

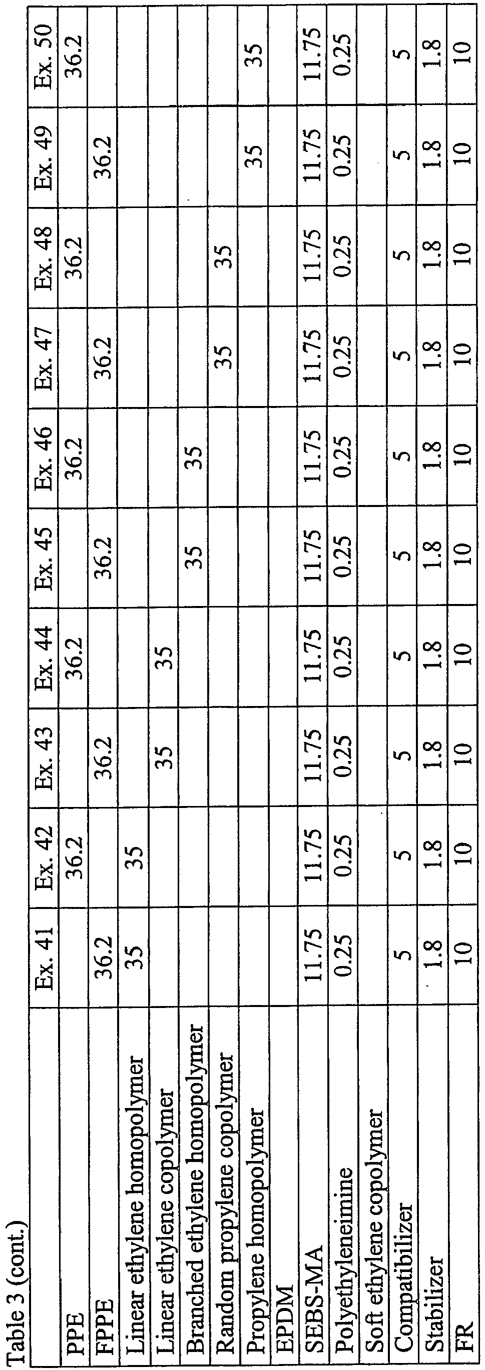

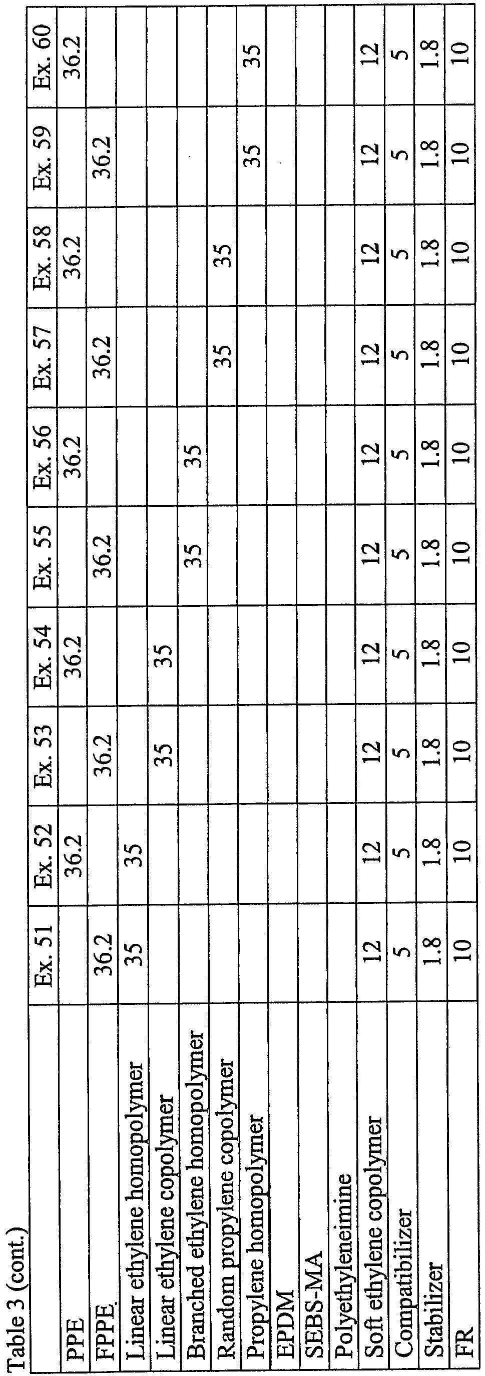

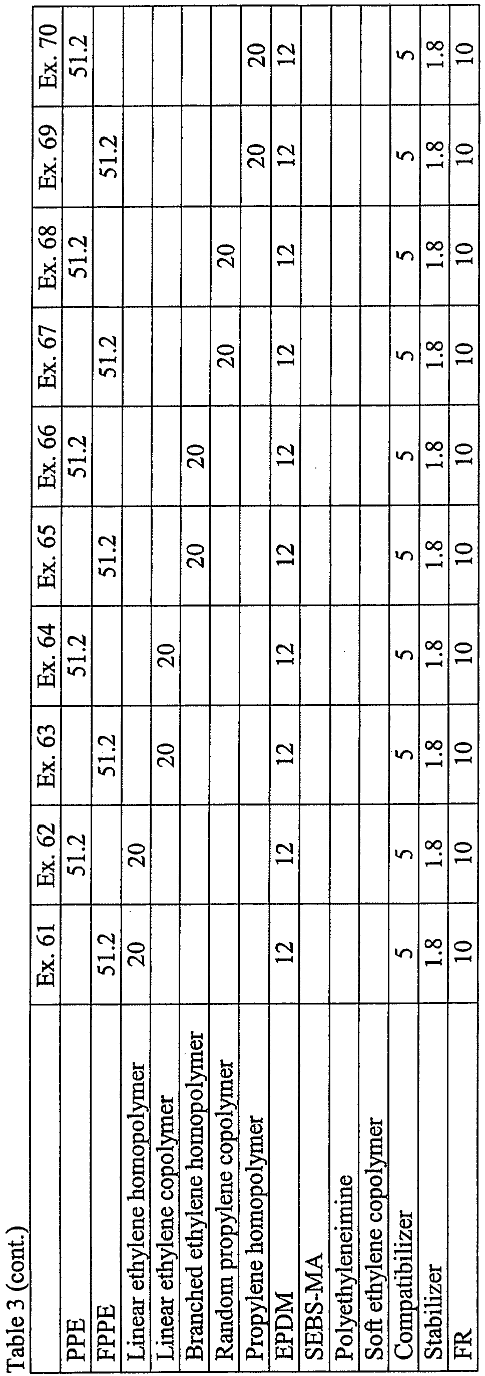

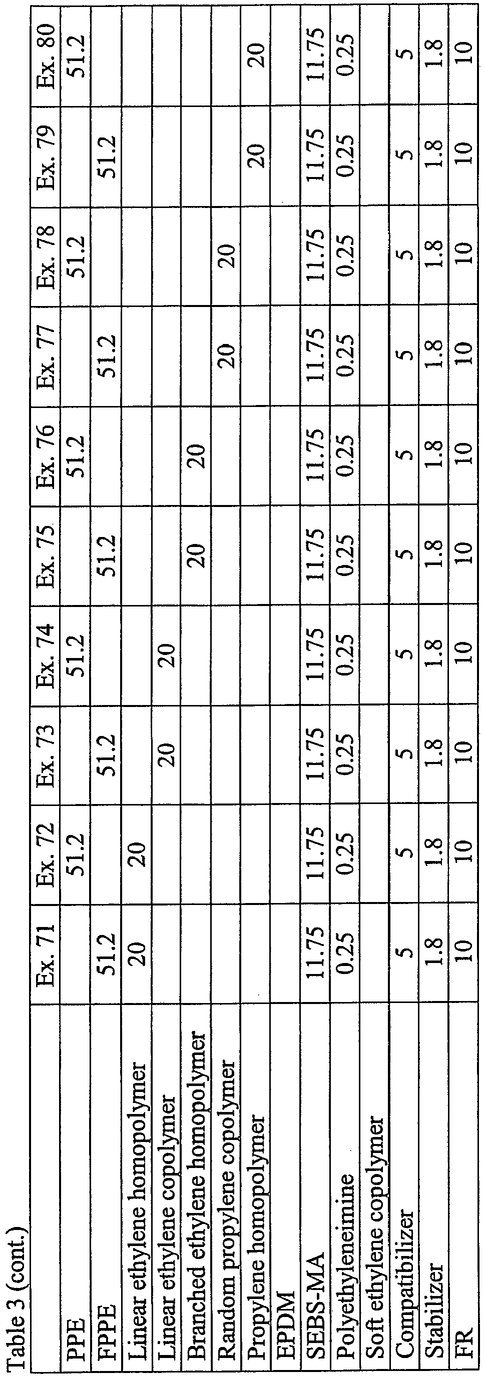

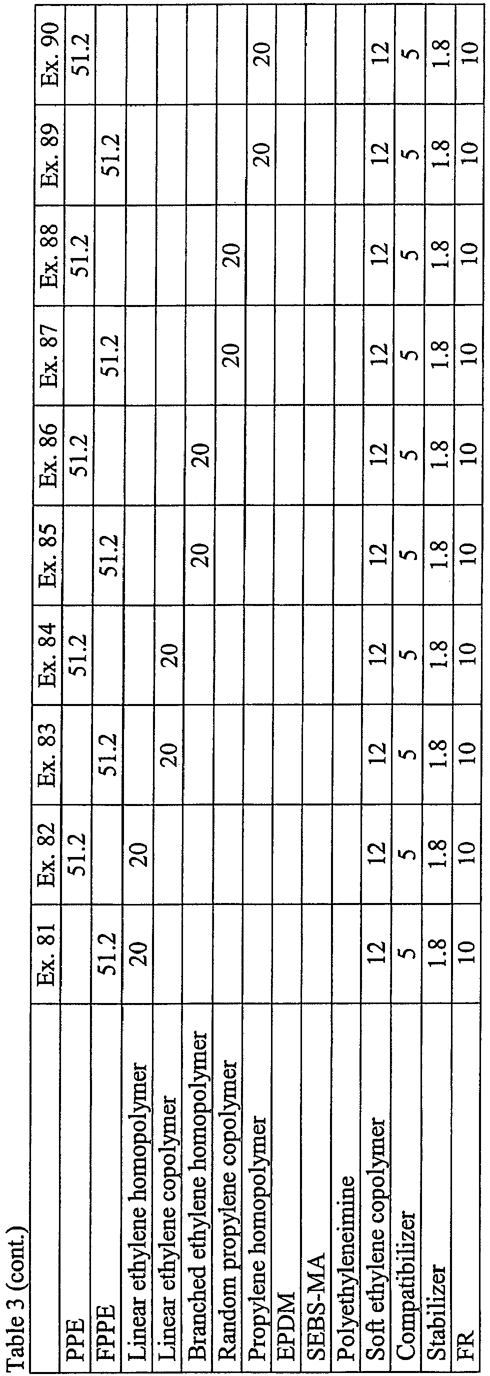

Composition viscosities and physical properties of injection molded parts are shown in Table 4. Melt volume flow rate (MVR) values were determined at 280°C and 5 kilogram load according to ASTM D1238-04c. Flexural modulus and flexural stress values were determined at 23°C according t ASTM D790-07. Shore D hardness was determined at 23°C according to ASTM D2240-05. Heat deflection temperature was determined with a 1.82 megapascal load according to ASTM D648-07. Notched Izod Impact Strength was determined at 23°C according to ASTM D256-06a. Modulus of elasticity, tensile stress at yield, tensile stress at break, and tensile elongation at break were determined at 23°C according to ASTM D638-08.

**Table 4**

| | Ex. 91 | Ex. 92 | Ex. 93 | Ex. 94 |
|---|---|---|---|---|
| COMPOSITIONS | | | | |
| PPE | 36.2 | 33.7 | 36.2 | 33.7 |
| Linear ethylene homopolymer | 35.0 | 32.5 | 35.0 | 32.5 |
| Soft ethylene copolymer | 0 | 0 | 12 | 12 |
| Compatibilizer | 17 | 12 | 5 | 0 |
| SEBS-MA | 0 | 9.9 | 0 | 9.9 |
| Stabilizer | 1.8 | 1.8 | 1.8 | 1.8 |
| Polyethyleneimine | 0 | 0.1 | 0 | 0.1 |
| FR | 10 | 10 | 10 | 10 |

| VISCOSITY PROPERTIES OF COMPOSITION | | | | |
|---|---|---|---|---|
| MVR at 280°C, 5 kg (cm³/10 min) | 39.2 | 21.6 | 31.6 | 17.1 |

| PHYSICAL PROPERTIES OF INJECTION MOLDED PARTS | | | | |
|---|---|---|---|---|
| Flexural Modulus (MPa) | 730 | 570 | 720 | 520 |
| Flex Stress, 5% strain (MPa) | 25 | 20 | 25 | 19 |
| Shore D Hardness | 62 | 60.9 | 58.8 | 57.1 |
| Deflection temp., 1.82 MPa (°C) | 51.2 | 47.4 | 51.4 | 47.8 |
| Notched Izod, 23°C (J/m) | 590 | 670 | 390 | 440 |
| Modulus of Elasticity, 50 mm/min (MPa) | 1030 | 900 | 870 | 670 |
| Tensile Stress at Yield (MPa) | 26.6 | 23.5 | 24.8 | 21.1 |
| Tensile Stress at Break (MPa) | 25.9 | 24.1 | 24.2 | 20.3 |
| Tensile Elongation at Yield (%) | 73 | 91 | 40 | 35 |
| Tensile Elongation at Break (%) | 79 | 130 | 43 | 43 |

Physical properties of injection molded parts as a function of electron beam dose are presented in Table 5. These results show that electron beam curing dramatically improves the solvent resistance of the composition, while having only minor effect on other properties. Vicat softening temperature was measured according to ASTM D1525-07. "Xylene insolubles", a measure of solvent resistance, is measured by exposing an injection molded part to 24 hours of refluxing xylene in a Soxhlet extractor; each values is the weight percent of the original molded part that remained undissolved after the extraction; higher values corresponding to greater solvent resistance.

**Table 5**

| | Dose (Mrad) | Ex. 91 | Ex. 92 | Ex. 93 | Ex. 94 |
|---|---|---|---|---|---|
| Tensile strength at yield (MPa) | 0 | 30.4 | 27.5 | 28.0 | 23.7 |
| | 10 | 29.6 | 26.7 | 28.1 | 24.4 |
| | 31 | 31.0 | 28.1 | 28.8 | 26.2 |
| relative change (%) | 0-31 | 2.0 | 2.2 | 2.9 | 10.5 |
| Tensile strength at break (MPa) | 0 | 30.0 | 27.1 | 26.9 | 23.3 |
| | 10 | 29.0 | 26.5 | 27.3 | 24.1 |
| | 31 | 30.7 | 25.6 | 27.9 | 25.2 |
| relative change (%) | 0-31 | 2.3 | -5.5 | 3.7 | 8.2 |
| Tensile elongation at break (%) | 0 | 39 | 88 | 42 | 46 |
| | 10 | 40 | 71 | 33 | 48 |
| | 31 | 37 | 72 | 34 | 53 |
| relative change (%) | 0-31 | -4.2 | -18.2 | -17.7 | 13.4 |
| Shore D hardness, 15 s | 0 | 60.3 | 61.7 | 60.5 | 59.3 |
| | 10 | 63.0 | 62.7 | 60.4 | 60.2 |
| | 31 | 64.8 | 63.5 | 62.3 | 60.9 |
| relative change (%) | 0-31 | 7.3 | 2.9 | 2.9 | 2.8 |
| Vicat softening temperature (°C) | 0 | 117 | 111 | 112 | 108 |
| | 10 | 118 | -- | -- | -- |
| | 31 | 121 | 118 | 121 | 118 |
| Xylene insolubles (wt%) | 0 | 0.3 | -- | -- | -- |
| | 10 | 13 | -- | -- | -- |
| | 31 | 45 | -- | -- | -- |

Physical properties of extruded wire insulation as a function of electron beam dose are presented in Table 6. These results show that electron beam curing dramatically improves the abrasion resistance and flame resistance of the wire insulation, while having only minor effect on tensile elongation. Tensile elongation was measured at 23°C according to UL1581, Section 470 using insulated wire having a cross-sectional area of 0.5 millimeter² and the insulation wall thickness specified in the table. Abrasion resistance was measured at 23°C according to ISO 6722, section 9.3 using a force of 7 Newtons and a rate of 55 cycles/minute of abrasion. The abrasion resistance values in Table 6 are the number of abrasion cycles to failure

(exposure of wire). Flame resistance testing was conducted according to ISO 6722, section 12.

**Table 6**

| | dose (Mrad) | Ex. 91 | Ex. 92 | Ex. 93 | Ex. 94 |
|---|---|---|---|---|---|
| Tensile elongation (insulation) | 0 | 83 | -- | -- | -- |
| (0.5 mm², 0.2 mm wall thickness) | 10 | 75 | -- | -- | -- |
| | 30 | 72 | -- | -- | -- |
| | 50 | 66 | -- | -- | -- |
| Tensile elongation (insulation) | 0 | 107 | -- | -- | -- |
| (0.5 mm², 0.275 mm wall thickness) | 10 | 100 | -- | -- | -- |
| | 30 | 92 | -- | -- | -- |
| | 50 | 89 | -- | -- | -- |
| Abrasion resistance (7 N, 55 1/min) | 0 | 360 | -- | -- | -- |
| | 10 | 1000 | -- | -- | -- |
| (0.5 mm² conductor, 0.2 mm wall) | 30 | 150 | -- | -- | -- |
| | 50 | 3000 | -- | -- | -- |
| Abrasion resistance (7 N, 55 1/min) | 0 | 1730 | -- | -- | -- |
| | 30 | 7900 | -- | -- | -- |
| (0.5 mm² conductor, 0.275 mm wall) | 50 | 4800 | -- | -- | -- |
| Flame resistance, flame-out time (sec) | 0 | 6 | 34 | 86 | 100 |
| | 50 | 3.5 | 7.4 | 19 | 27 |
| 0.5 mm², 0.2 mm wall thickness | | | | | |
| Flame resistance, remaining length (mm) | 0 | 470 | 380 | 250 | 210 |
| | 50 | 470 | 460 | 430 | 400 |

Aging properties of extruded wire insulation as a function of electron beam dose are presented in Table 7. These results show that electron beam curing improves the aging resistance of the composition. Aging properties were measured according to LV112, "Electrical cables for motor vehicles; Single-core, unshielded", Section 8.6.6, using "lubricant grease" as the medium ("lubricant grease" is one of the media specified in LV112-1 Media Group I, and it can be obtained as Aralub HLP-2). In Table 7, "20 mm", "10 mm", and "2 mm" refer to the diameters of the mandrels in millimeters. Values in the table are the number of samples that passed the test. For example, "3/3" means that of three samples tested, three passed the test.

**Table 7**

| | dose (Mrad) | Ex. 91 | Ex. 92 | Ex. 93 | Ex. 94 |
|---|---|---|---|---|---|
| 240 hour aging, 20 mm | 0 | 3/3 | -- | -- | -- |
| | 10 | 3/3 | -- | -- | -- |
| | 30 | 3/3 | -- | -- | -- |
| | 50 | 3/3 | -- | -- | -- |
| 240 hour aging, 10 mm | 0 | 3/3 | -- | -- | -- |
| | 10 | 3/3 | -- | -- | -- |
| | 30 | 3/3 | -- | -- | -- |
| | 50 | 3/3 | -- | -- | -- |
| 240 hour aging, 2 mm | 0 | 1/3 | -- | -- | -- |
| | 10 | 1/3 | -- | -- | -- |
| | 30 | 3/3 | -- | -- | -- |
| | 50 | 3/3 | -- | -- | -- |
| 480 hour aging, 20 mm | 0 | 3/3 | -- | -- | -- |
| | 10 | 2/3 | -- | -- | -- |
| | 30 | 3/3 | -- | -- | -- |
| | 50 | 3/3 | -- | -- | -- |
| 480 hour aging, 10 mm | 0 | 3/3 | -- | -- | -- |
| | 10 | 1/3 | -- | -- | -- |
| | 30 | 2/3 | -- | -- | -- |
| | 50 | 1/3 | -- | -- | -- |
| 480 hour aging, 2 mm | 0 | 0/3 | -- | -- | -- |
| | 10 | 1/3 | -- | -- | -- |
| | 30 | 0/3 | -- | -- | -- |
| | 50 | 2/3 | -- | -- | -- |
| 720 hour aging, 20 mm | 0 | 3/3 | -- | -- | -- |
| | 10 | 3/3 | -- | -- | -- |
| | 30 | 3/3 | -- | -- | -- |
| | 50 | 3/3 | -- | -- | -- |
| 720 hour aging, 10 mm | 0 | 0/3 | -- | -- | -- |
| | 10 | 0/3 | -- | -- | -- |
| | 30 | 0/3 | -- | -- | -- |
| | 50 | 0/3 | -- | -- | -- |
| 720 hour aging, 2 mm | 0 | 0/3 | -- | -- | -- |
| | 10 | 0/3 | -- | -- | -- |
| | 30 | 0/3 | -- | -- | -- |
| | 50 | 0/3 | -- | -- | -- |
| 1000 hour aging, 20 mm | 0 | 0/3 | -- | -- | -- |
| | 10 | 0/3 | -- | -- | -- |
| | 30 | 0/3 | -- | -- | -- |
| | 50 | 1/3 | -- | -- | -- |
| 1000 hour aging, 10 mm | 0 | 0/3 | -- | -- | -- |
| | 10 | 0/3 | -- | -- | -- |
| | 30 | 0/3 | -- | -- | -- |
| | 50 | 0/3 | -- | -- | -- |
| 1000 hour aging, 2 mm | 0 | 0/3 | -- | -- | -- |
| | 10 | 0/3 | -- | -- | -- |
| | 30 | 0/3 | -- | -- | -- |
| | 50 | 0/3 | -- | -- | -- |

This written description uses examples to disclose the invention, including the best mode, and also to enable any person skilled in the art to make and use the invention. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

All cited patents, patent applications, and other references are incorporated herein by reference in their entirety. However, if a term in the present application contradicts or conflicts with a term in the incorporated reference, the term from the present application takes precedence over the conflicting term from the incorporated reference.

All ranges disclosed herein are inclusive of the endpoints, and the endpoints are independently combinable with each other.

The use of the terms "a" and "an" and "the" and similar referents in the context of describing the invention (especially in the context of the following claims) are to be construed to cover both the singular and the plural, unless otherwise indicated herein or clearly contradicted by context. Further, it should further be noted that the terms "first," "second," and the like herein do not denote any order, quantity, or importance, but rather are used to distinguish one element from another. The modifier "about" used in connection with a quantity is inclusive of the stated value and has the meaning dictated by the context (e.g., it includes the degree of error associated with measurement of the particular quantity).

## Claims

1. A cured composition, comprising:
the product obtained on curing with 5 to 5,000 megarads of electron beam radiation an uncured composition comprising
20 to 55 weight percent of a poly(arylene ether),
20 to 50 weight percent of a thermoplastic polyolefin, and
2 to 10 weight percent of a compatibilizer for the poly(arylene ether) and the thermoplastic polyolefin;
wherein all weight percents are based on the total weight of the uncured composition;
wherein the uncured composition excludes brominated materials;
wherein the uncured composition excludes polymerizable monomers;
wherein the cured composition passes the class A, B, or C short-term and long term heat ageing tests according to ISO 6722, Section 10; and
wherein the cured composition passes the chemical resistance test according to LV112 Section 8.8.1 using at least one fluid medium specified in LV112-1 Media group I or Media group II.

2. The cured composition of claim 1, comprising a continuous phase comprising the thermoplastic polyolefin, and a dispersed phase comprising the poly(arylene ether).

3. The cured composition of claim 1 or 2, wherein the compatibilizer is a polystyrene-poly(ethylene-butylene)-polystyrene triblock copolymer having a polystyrene content of 35 to 80 weight percent based on the total weight of the triblock copolymer.

4. The cured composition of claim 1 or 2, wherein the compatibilizer is a polystyrene-poly(ethylene-butylene-styrene)-polystyrene triblock copolymer having a polystyrene content of 35 to 65 weight percent based on the total weight of the triblock copolymer.

5. The cured composition of any of claims 1-4, wherein the uncured composition further comprises 5 to 20 weight percent of an impact modifier.

6. The cured composition of claim 5, wherein the impact modifier comprises an ethylene-propylene-diene rubber.

7. The cured composition of claim 5, wherein the impact modifier comprises the reaction product of a maleic anhydride grafted polystyrene-poly(ethylene-butylene)-polystyrene triblock copolymer and a polyethyleneimine.

8. The cured composition of claim 5, wherein the impact modifier comprises an ethylene-alpha olefin copolymer.

9. The cured composition of any of claims 1-8, wherein the cured composition is halogen-free.

10. The cured composition of claim 1,
wherein the poly(arylene ether) is a poly(2,6-dimethyl-1,4-phenylene ether) having an intrinsic viscosity of 0.3 to 0.6 deciliter per gram measured at 25°C in chloroform;
wherein the uncured composition comprises 30 to 40 weight percent of the poly(arylene ether);
wherein the thermoplastic polyolefin is a high density polyethylene, a linear low density polyethylene, or a mixture thereof;
wherein the uncured composition comprises 30 to 40 weight percent of the thermoplastic polyolefin;
wherein the uncured composition further comprises an impact modifier comprising a polystyrene-poly(ethylene-butylene)-polystyrene triblock copolymer having a weight average molecular weight of 15,000 to 50,000 atomic mass units;
wherein the uncured composition comprises 8 to 17 weight percent of the impact modifier;
wherein the compatibilizer is a polystyrene-poly(ethylene-butylene)-polystyrene triblock copolymer having a polystyrene content of 35 to 70 weight percent based on the total weight of the triblock copolymer; wherein the uncured composition comprises 3 to 8 weight percent of the compatibilizer; and
wherein the cured composition is halogen-free.

11. An extruded article, comprising the product of a process comprising:
extrusion molding an uncured composition comprising
20 to 55 weight percent of a poly(arylene ether),
20 to 50 weight percent of a thermoplastic polyolefin, and
2 to 10 weight percent of a compatibilizer for the poly(arylene ether) and the thermoplastic polyolefin;
wherein all weight percents are based on the total weight of the uncured composition;
wherein the uncured composition excludes brominated materials; and
wherein the uncured composition excludes polymerizable monomers; and
curing the uncured composition with 5 to 5,000 megarads of electron beam radiation to form a cured composition;
wherein the cured composition passes the class A, B, or C short-term and long term heat ageing tests according to ISO 6722, Section 10; and
wherein the cured composition passes the chemical resistance test according to LV112 Section 8.8.1 using at least one fluid medium specified in LV112-1 Media group I or Media group II.

12. A coated wire, comprising:
a conductor, and
a covering disposed on the conductor;
wherein the covering comprises a cured composition that is the product obtained on curing with 5 to 5,000 megarads of electron beam radiation an uncured composition comprising
20 to 55 weight percent of a poly(arylene ether),
20 to 50 weight percent of a thermoplastic polyolefin, and
2 to 10 weight percent of a compatibilizer for the poly(arylene ether) and the thermoplastic polyolefin;
wherein all weight percents are based on the total weight of the uncured composition;
wherein the uncured composition excludes brominated materials; and
wherein the uncured composition excludes polymerizable monomers;
wherein the cured composition passes the class A, B, or C short-term and long term heat ageing tests according to ISO 6722, Section 10; and
wherein the cured composition passes the chemical resistance test according to LV112 Section 8.8.1 using at least one fluid medium specified in LV112-1 Media group I or Media group II.

13. A method of improving the chemical resistance of a poly(arylene ether) composition, comprising:
curing an uncured poly(arylene ether) composition with 5 to 5,000 megarads of electron beam radiation to form a cured poly(arylene ether) composition;
wherein the uncured poly(arylene ether) composition comprises
20 to 55 weight percent of a poly(arylene ether),
20 to 50 weight percent of a thermoplastic polyolefin,
2 to 10 weight percent of a compatibilizer for the poly(arylene ether) and the thermoplastic polyolefin;
wherein all weight percents are based on the total weight of the uncured composition;
wherein the uncured composition excludes brominated materials;
wherein the uncured composition excludes polymerizable monomers;
wherein the cured composition passes the class A, B, or C short-term and long term heat ageing tests according to ISO 6722, Section 10; and
wherein the cured composition passes the chemical resistance test according to LV112 Section 8.8.1 using at least one fluid medium specified in Media group I or Media group II.

## Patentansprüche

1. Ausgehärtete Zusammensetzung, umfassend:
das beim Aushärten einer ungehärteten Zusammensetzung mit 5 bis 5.000 Megarad Elektronenstrahlung erhaltene Erzeugnis, wobei die ungehärtete Zusammensetzung
20 bis 55 Gewichtsprozent eines Poly(arylenether)s,
20 bis 50 Gewichtsprozent eines thermoplastischen Polyolefins, und
2 bis 10 Gewichtsprozent eines Verträglichkeitsmachers bzw. Compatibilizers für den Poly(arylenether) und das thermoplastische Polyolefin umfasst;
wobei alle Gewichtsprozentsätze auf das Gesamtgewicht der ungehärteten Zusammensetzung bezogen sind;
wobei die ungehärtete Zusammensetzung bromierte Materialien ausschließt;
wobei die ungehärtete Zusammensetzung polymerisierbare Monomere ausschließt;
wobei die ausgehärtete Zusammensetzung die Kurzzeit- und Langzeit-Wärmealterungstests der Klasse A, B oder C gemäß ISO 6722, Abschnitt 10 besteht; und
wobei die ausgehärtete Zusammensetzung den Test für chemische Widerstandsfähigkeit gemäß LV112 Abschnitt 8.8.1 unter Verwendung mindestens eines Fluidmediums, das in Medien der Gruppe I (*Media group I*) oder Medien der Gruppe II (*Media group II*) spezifiziert ist, besteht.

2. Ausgehärtete Zusammensetzung nach Anspruch 1, umfassend eine kontinuierliche Phase, die das thermoplastische Polyolefin umfasst, und eine dispergierte Phase, die den Poly(arylenether) umfasst.

3. Ausgehärtete Zusammensetzung nach Anspruch 1 oder 2, wobei der Verträglichkeitsmacher ein Polystyrol-Poly(ethylen-butylen)-Polystyrol-Triblock-Copolymer mit einem Polystyrolgehalt von 35 bis 80 Gewichtsprozent, bezogen auf das Gesamtgewicht des Triblock-Copolymers ist.

4. Ausgehärtete Zusammensetzung nach Anspruch 1 oder 2, wobei der Verträglichkeitsmacher ein Polystyrol-Poly(ethylen-butylen-styrol)-Polystyrol-Triblock-Copolymer mit einem Polystyrolgehalt von 35 bis 65 Gewichtsprozent, bezogen auf das Gesamtgewicht des Triblock-Copolymers ist.

5. Ausgehärtete Zusammensetzung nach einem der Ansprüche 1 bis 4, wobei die ungehärtete Zusammensetzung weiterhin 5 bis 20 Gewichtsprozent eines Schlagzähigkeitsmodifikators umfasst.

6. Ausgehärtete Zusammensetzung nach Anspruch 5, wobei der Schlagzähigkeitsmodifikator einen Ethylen-Propylen-Dien-Kautschuk umfasst.

7. Ausgehärtete Zusammensetzung nach Anspruch 5, wobei der Schlagzähigkeitsmodifikator das Reaktionsprodukt eines Maleinsäureanhydridgepfropften Polystyrol-Poly(ethylen-butylen)-Polystyrol-Triblock-Copolymers und eines Polyethylenimins umfasst.

8. Ausgehärtete Zusammensetzung nach Anspruch 5, wobei der Schlagzähigkeitsmodifikator ein Ethylen-Alpha-Olefin-Copolymer umfasst.

9. Ausgehärtete Zusammensetzung nach einem der Ansprüche 1 bis 8, wobei die ausgehärtete Zusammensetzung halogenfrei ist.

10. Ausgehärtete Zusammensetzung nach Anspruch 1,
wobei der Poly(arylenether) ein Poly(2,6-dimethyl-1,4-phenylenether) mit einer Grenzviskosität von 0,3 bis 0,6 Deziliter pro Gramm bei Messung bei 25 °C in Chloroform ist;
wobei die ungehärtete Zusammensetzung 30 bis 40 Gewichtsprozent des Poly(arylenether)s umfasst;
wobei das thermoplastische Polyolefin ein Polyethylen hoher Dichte, ein Polyethylen niedriger Dichte mit linearer Struktur, oder ein Gemisch davon ist;
wobei die ungehärtete Zusammensetzung 30 bis 40 Gewichtsprozent des thermoplastischen Polyolefins umfasst;
wobei die ungehärtete Zusammensetzung weiterhin einen Schlagzähigkeitsmodifikator umfasst, der ein Polystyrol-Poly(ethylen-butylen)-Polystyrol-Triblock-Copolymer mit einem gewichtsgemittelten Molekulargewicht von 15.000 bis 50.000 atomaren Masseeinheiten umfasst; wobei die ungehärtete Zusammensetzung 8 bis 17 Gewichtsprozent des Schlagzähigkeitsmodifikators umfasst;
wobei der Verträglichkeitsmacher ein Polystyrol-Poly(ethylen-butylen)-Polystyrol-Triblock-Copolymer mit einem Polystyrolgehalt von 35 bis 70 Gewichtsprozent, bezogen auf das Gesamtgewicht des Triblock-Copolymers ist;
wobei die ungehärtete Zusammensetzung 3 bis 8 Gewichtsprozent des Verträglichkeitsmachers umfasst; und
wobei die ausgehärtete Zusammensetzung halogenfrei ist.

11. Extrudierter Gegenstand, umfassend das Erzeugnis eines Verfahrens, umfassend:
Strangpressen einer ungehärteten Zusammensetzung umfassend 20 bis 55 Gewichtsprozent eines Poly(arylenether)s,
20 bis 50 Gewichtsprozent eines thermoplastischen Polyolefins, und
2 bis 10 Gewichtsprozent eines Verträglichkeitsmachers bzw. Compatibilizers für den Poly(arylenether) und das thermoplastische Polyolefin;
wobei alle Gewichtsprozentsätze auf das Gesamtgewicht der ungehärteten Zusammensetzung bezogen sind;
wobei die ungehärtete Zusammensetzung bromierte Materialien ausschließt; und
wobei die ungehärtete Zusammensetzung polymerisierbare Monomere ausschließt; und
Aushärten der ungehärteten Zusammensetzung mit 5 bis 5.000 Megarad Elektronenstrahlung zur Bildung einer ausgehärteten Zusammensetzung;
wobei die ausgehärtete Zusammensetzung die Kurzzeit- und Langzeit-Wärmealterungstests der Klasse A, B oder C gemäß ISO 6722, Abschnitt 10 besteht; und
wobei die ausgehärtete Zusammensetzung den Test für chemische Widerstandsfähigkeit gemäß LV112 Abschnitt 8.8.1 unter Verwendung mindestens eines Fluidmediums, das in Medien der Gruppe I (*Media group I*) oder Medien der Gruppe II (*Media group II*) spezifiziert ist, besteht.

12. Beschichteter Draht, umfassend:
einen Leiter, und
eine über dem Leiter angeordnete Abdeckung;
wobei die Abdeckung eine ausgehärtete Zusammensetzung umfasst, die das beim Aushärten einer ungehärteten Zusammensetzung mit 5 bis 5.000 Megarad Elektronenstrahlung erhaltene Erzeugnis ist, wobei die ungehärtete Zusammensetzung
20 bis 55 Gewichtsprozent eines Poly(arylenether)s,
20 bis 50 Gewichtsprozent eines thermoplastischen Polyolefins, und 2 bis 10 Gewichtsprozent eines Verträglichkeitsmachers bzw. Compatibilizers für den Poly(arylenether) und das thermoplastische Polyolefin umfasst;
wobei alle Gewichtsprozentsätze auf das Gesamtgewicht der ungehärteten Zusammensetzung bezogen sind;
wobei die ungehärtete Zusammensetzung bromierte Materialien ausschließt; und
wobei die ungehärtete Zusammensetzung polymerisierbare Monomere ausschließt;
wobei die ausgehärtete Zusammensetzung die Kurzzeit- und Langzeit-Wärmealterungstests der Klasse A, B oder C gemäß ISO 6722, Abschnitt 10 besteht; und
wobei die ausgehärtete Zusammensetzung den Test für chemische Widerstandsfähigkeit gemäß LV112 Abschnitt 8.8.1 unter Verwendung mindestens eines Fluidmediums, das in Medien der Gruppe I (*Media group I*) oder Medien der Gruppe II (*Media group II*) spezifiziert ist, besteht.

13. Verfahren zur Verbesserung der chemischen Widerstandsfähigkeit einer Poly(arylenether)-Zusammensetzung, umfassend:
Aushärten einer ungehärteten Poly(arylenether)-Zusammensetzung mit 5 bis 5.000 Megarad Elektronenstrahlung zur Bildung einer ausgehärteten Poly(arylenether)-Zusammensetzung;
wobei die ungehärtete Poly(arylenether)-Zusammensetzung
20 bis 55 Gewichtsprozent eines Poly(arylenether)s,
20 bis 50 Gewichtsprozent eines thermoplastischen Polyolefins, und
2 bis 10 Gewichtsprozent eines Verträglichkeitsmachers bzw. Compatibilizers für den Poly(arylenether) und das thermoplastische Polyolefin umfasst;
wobei alle Gewichtsprozentsätze auf das Gesamtgewicht der ungehärteten Zusammensetzung bezogen sind;
wobei die ungehärtete Zusammensetzung bromierte Materialien ausschließt;
wobei die ungehärtete Zusammensetzung polymerisierbare Monomere ausschließt;
wobei die ausgehärtete Zusammensetzung die Kurzzeit- und Langzeit-Wärmealterungstests der Klasse A, B oder C gemäß ISO 6722, Abschnitt 10 besteht; und
wobei die ausgehärtete Zusammensetzung den Test für chemische Widerstandsfähigkeit gemäß LV112 Abschnitt 8.8.1 unter Verwendung mindestens eines Fluidmediums, das in Medien der Gruppe I (*Media group I*) oder Medien der Gruppe II (*Media group II*) spezifiziert ist, besteht.

## Revendications

1. Composition durcie, comprenant :
le produit obtenu par durcissement, avec un rayonnement par faisceau d'électrons de 5 à 5000 mégarads, d'une composition non durcie comprenant
20 à 55 pourcents en poids d'un poly(arylène éther),
20 à 50 pourcents en poids d'une polyoléfine thermoplastique, et
2 à 10 pourcents en poids d'un agent de compatibilisation pour le poly(arylène éther) et la polyoléfine thermoplastique ;
dans laquelle tous les pourcentages en poids sont rapportés au poids total de la composition non durcie,
dans laquelle la composition non durcie exclut des matériaux bromés ;
dans laquelle la composition non durcie exclut des monomères polymérisables ;
la composition durcie passant les tests de vieillissement thermique à court terme et à long terme des classes A, B ou C selon ISO 6722, Section 10 ; et
la composition durcie passant le test de résistance aux agents chimiques selon LV112 Section 8.8.1 par utilisation d'au moins un milieu fluide spécifié dans LV112-1 groupe de Milieux 1 ou groupe de Milieux II.

2. Composition durcie selon la revendication 1, comprenant une phase continue comprenant la polyoléfine thermoplastique et une phase dispersée comprenant le poly(arylène éther).

3. Composition durcie selon la revendication 1 ou 2, dans laquelle l'agent de compatibilisation est un copolymère tribloc polystyrène-poly(éthylène-butylène)-polystyrène ayant une teneur en polystyrène de 35 à 80 pourcents en poids par rapport au poids total du copolymère tribloc.

4. Composition durcie selon la revendication 1 ou 2, dans laquelle l'agent de compatibilisation est un copolymère tribloc polystyrène-poly(éthylène-butylènestyrène)-polystyrène ayant une teneur en polystyrène de 35 à 65 pourcents en poids par rapport au poids total du copolymère tribloc.

5. Composition durcie selon l'une quelconque des revendications 1 à 4, dans laquelle la composition non durcie comprend en outre 5 à 20 pourcents en poids d'un modifiant choc.

6. Composition durcie selon la revendication 5, dans laquelle le modifiant choc comprend un caoutchouc éthylène-propylène-diène.

7. Composition durcie selon la revendication 5, dans laquelle le modifiant choc comprend le produit de la réaction d'un copolymère tribloc polystyrènepoly(éthylène-butylène)-polystyrène à greffage anhydride maléique, et d'une polyéthylène-imine.

8. Composition durcie selon la revendication 5, dans laquelle le modifiant choc comprend un copolymère éthylène-alpha oléfine.

9. Composition durcie selon l'une quelconque des revendications 1 à 8, la composition durcie étant exempte d'halogène.

10. Composition durcie selon la revendication 1,
dans laquelle le poly(arylène éther) est un poly(2,6-diméthyl-1,4-phénylène éther) ayant une viscosité intrinsèque de 0,3 à 0,6 décilitre par gramme, mesurée à 25°C dans du chloroforme ;
dans laquelle la composition non durcie comprend 30 à 40 pourcents en poids du poly(arylène éther) ;
dans laquelle la polyoléfine thermoplastique est un polyéthylène haute densité, un polyéthylène haute densité linéaire ou un mélange de ceux-ci ;
dans laquelle la composition non durcie comprend 30 à 40 pourcents en poids de la polyoléfine thermoplastique ;
dans laquelle la composition non durcie comprend en outre un modifiant choc comprenant un copolymère tribloc polystyrène-poly(éthylène-butylène)-polystyrène ayant une masse moléculaire moyenne en masse de 15 000 à 50 000 unités de masse atomique ;
dans laquelle la composition non durcie comprend 8 à 17 pourcents en poids du modifiant choc ;
dans laquelle l'agent de compatibilisation est un copolymère tribloc polystyrène-poly(éthylène-butylène)-polystyrène ayant une teneur en polystyrène de 35 à 70 pourcents en poids par rapport au poids total du copolymère tribloc ;
dans laquelle la composition non durcie comprend 3 à 8 pourcents en poids de l'agent de compatibilisation ; et la composition durcie étant exempte d'halogène.

11. Article extrudé comprenant le produit d'un procédé comprenant :
le moulage par extrusion d'une composition non durcie comprenant
20 à 55 pourcents en poids d'un poly(arylène éther),
20 à 50 pourcents en poids d'une polyoléfine thermoplastique, et
2 à 10 pourcents en poids d'un agent de compatibilisation pour le poly(arylène éther) et la polyoléfine thermoplastique ;
dans laquelle tous les pourcentages en poids sont rapportés au poids total de la composition non durcie,
dans laquelle la composition non durcie exclut des matériaux bromés ;
dans laquelle la composition non durcie exclut des monomères polymérisables ;
et
le durcissement de la composition non durcie avec un rayonnement par faisceau d'électrons de 5 à 5000 mégarads pour former une composition durcie ;
la composition durcie passant les tests de vieillissement thermique à court terme et à long terme des classes A, B ou C selon ISO 6722, Section 10 ; et
la composition durcie passant le test de résistance aux agents chimiques selon LV112 Section 8.8.1 par utilisation d'au moins un milieu fluide spécifié dans LV112-1 groupe de Milieux 1 ou groupe de Milieux II.

12. Fil revêtu, comprenant :
un conducteur, et
un revêtement disposé sur le conducteur ;
dans lequel le revêtement comprend une composition durcie qui est le produit obtenu par durcissement, avec un rayonnement par faisceau d'électrons de 5 à 5000 mégarads, d'une composition non durcie comprenant
20 à 55 pourcents en poids d'un poly(arylène éther),
20 à 50 pourcents en poids d'une polyoléfine thermoplastique, et
2 à 10 pourcents en poids d'un agent de compatibilisation pour le poly(arylène éther) et la polyoléfine thermoplastique ;
dans laquelle tous les pourcentages en poids sont rapportés au poids total de la composition non durcie,
dans laquelle la composition non durcie exclut des matériaux bromés ;
dans laquelle la composition non durcie exclut des monomères polymérisables ;
la composition durcie passant les tests de vieillissement thermique à court terme et à long terme des classes A, B ou C selon ISO 6722, Section 10 ; et
la composition durcie passant le test de résistance aux agents chimiques selon LV112 Section 8.8.1 par utilisation d'au moins un milieu fluide spécifié dans LV112-1 groupe de Milieux 1 ou groupe de Milieux II.

13. Procédé pour améliorer la résistance aux agents chimiques d'une composition de poly(arylène éther), comprenant :
le durcissement d'une composition de poly(arylène éther) non durcie avec un rayonnement par faisceau d'électrons de 5 à 5000 mégarads pour former une composition de poly(arylène éther) durcie ;
dans lequel la composition de poly(arylène éther) non durcie comprend :
20 à 55 pourcents en poids d'un poly(arylène éther),
20 à 50 pourcents en poids d'une polyoléfine thermoplastique, et
2 à 10 pourcents en poids d'un agent de compatibilisation pour le poly(arylène éther) et la polyoléfine thermoplastique ;
dans laquelle tous les pourcentages en poids sont rapportés au poids total de la composition non durcie,
dans laquelle la composition non durcie exclut des matériaux bromés ;
dans laquelle la composition non durcie exclut des monomères polymérisables ;
la composition durcie passant les tests de vieillissement thermique à court terme et à long terme des classes A, B ou C selon ISO 6722, Section 10 ; et
la composition durcie passant le test de résistance aux agents chimiques selon LV112 Section 8.8.1 par utilisation d'au moins un milieu fluide spécifié dans LV112-1 groupe de Milieux 1 ou groupe de Milieux II.
